# FASCICULE DE BREVET EUROPEEN

(11) **EP 4 421 371 B1**
(45) Date de publication et mention de la délivrance du brevet: **08.04.2026**
(21) Numéro de dépôt: 24159681.6
(22) Date de dépôt: 26.02.2024
(51) Int. Cl.: F16L 37/00, F16L 37/22, F16L 37/23, F16L 37/32, F16L 37/40

(54) **ÉLÉMENT FEMELLE DE RACCORD RAPIDE, ET RACCORD RAPIDE ASSOCIÉ**
SCHNELLKUPPLUNGSBUCHSE UND ZUGEHÖRIGE SCHNELLKUPPLUNG
FEMALE ELEMENT OF A QUICK-CONNECTOR AND ASSOCIATED QUICK CONNECTOR

(30) Priorité: 27.02.2023 FR 2301775
(43) Date de publication de la demande: 28.08.2024
(73) Titulaire: Staubli Faverges, 74210 Faverges-Seythenex (FR)
(72) Inventeur: MARQUES BARROCA, Serafim, 73200 ALBERTVILLE (FR); DURIEUX, Christophe, 73200 GILLY SUR ISERE (FR)
(74) Mandataire: Lavoix

(56) Documents cités:
- EP-A2- 1 793 154
- CN-U- 208 565 907
- CN-U- 211 951 821
- CN-U- 218 063 864
- US-A- 3 104 088

## Description

La présente invention concerne un élément femelle de raccord rapide, ainsi qu'un raccord rapide comprenant un tel élément femelle et un élément mâle complémentaire.

Les raccords rapides sont des dispositifs de connexion fluidique comprenant un élément femelle et un élément mâle associé, par exemple un about. Chacun des éléments mâle et femelle comprend un passage interne, les passages internes étant en communication fluidique lorsque le raccord est en configuration accouplée. L'élément femelle comprend le plus souvent un dispositif de verrouillage, qui s'enclenche automatiquement lors de la connexion des éléments mâle et femelle, de manière à maintenir le raccord en configuration accouplée, d'où le nom de raccord rapide.

Dans de nombreux domaines industriels, des appareils nécessitent une thermorégulation, qui est réalisée par alimentation en fluides caloporteurs, tels que de l'eau froide, de l'eau chaude, de l'eau glycolée ou autres fluides. À titre d'exemple, dans le domaine de la plasturgie, une presse à injecter comprend des composants, en particulier des moules, qui nécessitent d'être thermorégulés par un circuit en eau qui traverse des zones de convection thermique de ces composants. La connexion des canalisations du circuit d'eau nécessite une solution de raccord rapide, dont l'élément mâle et l'élément femelle doivent être faciles à connecter, de manière sécurisée, et à déconnecter.

Il est connu d'utiliser un about et un élément femelle contenant des billes qui rentrent au contact de la surface extérieure de l'about et qui pénètrent dans une gorge de l'about pour verrouiller le raccord rapide en configuration accouplée.

FR2901860A1 décrit, par exemple, un élément femelle de raccord fluidique comprenant un corps d'élément 21 percé de logements radiaux inclinés 40b qui accueillent des doigts de verrouillage, lesquels sont repoussés par un poussoir 31 qui est entrainé vers l'avant par un ressort 32. L'élément femelle est déverrouillable par l'action d'une bague de manœuvre 30 qui agit directement sur les doigts de verrouillage, par l'intermédiaire d'une liaison mécanique réalisée par deux oreilles 40g et une tige 40j. Cette solution a l'inconvénient de complexifier les formes de la bague de manœuvre et de chaque doigt de verrouillage, ce qui pose un problème de réalisation, de coût d'industrialisation et d'encombrement général.

FR3096109A1 décrit, quant à lui, un élément de raccord rapide à doigts inclinés avec une bague de manœuvre qui comprend en outre un manchon avec une paroi interne permettant le retour des doigts de verrouillage par soulèvement à la déconnexion. Là-aussi, cette solution a l'inconvénient d'augmenter la taille radiale de l'élément femelle pour réaliser la fonction, ce qui pose un problème d'encombrement, de poids et de coût industriel.

CN-208 565 907-U, CN-218 063 864-U, CN-211 951 821-U et US-3 104 088-A décrivent chacun un élément femelle de raccord rapide comprenant des billes de verrouillage, qui sont chacune reçues dans un logement agencé radialement à un axe longitudinal de l'élément femelle. Des inserts réalisés en matériau magnétique sont prévus, de manière à attirer les billes dans une position radialement éloignée de l'axe longitudinal et à autoriser le retrait de l'élément mâle.

C'est à ces problèmes qu'entend plus particulièrement remédier l'invention, en proposant un élément femelle de raccord rapide, qui soit à la fois sécurisé tout en étant simple à réaliser et peu encombrant.

À cet effet, l'invention concerne un élément femelle de raccord rapide selon la revendication 1.

L'élément femelle est destiné à la jonction amovible de canalisations de fluide sous pression, ledit élément femelle étant apte à être accouplé avec un élément mâle complémentaire, l'élément femelle comprenant :
- un corps femelle creux définissant un canal d'insertion, le canal d'insertion définissant un axe central du corps femelle et débouchant du corps femelle par une embouchure, l'embouchure définissant un côté avant de l'élément femelle,
- au moins un organe de verrouillage, qui est reçu dans un logement respectif ménagé dans l'épaisseur du corps femelle :
   - chaque logement étant incliné par rapport à l'axe central du corps femelle et débouchant dans le canal d'insertion,
   - chaque organe de verrouillage étant mobile dans son logement entre une position distale, dans laquelle l'organe de verrouillage dépasse dans le canal d'insertion, et une position proximale, dans laquelle l'organe de verrouillage ne dépasse pas dans le canal d'insertion ;
- un poussoir :
   - qui comprend une paroi orientée vers chaque logement, et
   - qui est mobile entre une position avant, dans laquelle la paroi du poussoir maintient chaque organe de verrouillage dans sa position distale, et une position arrière, dans laquelle chaque organe de verrouillage est dans sa position proximale,
- une bague de manœuvre, qui entoure le corps femelle et qui est mobile par rapport au corps femelle le long de l'axe central entre une position avancée et une position reculée, la bague de manœuvre étant configurée pour entrainer le poussoir de la position avant vers la position arrière lorsque la bague de manœuvre est déplacée de la position avancée vers la position reculée, et
- un premier organe de rappel, configuré pour rappeler la bague de manœuvre vers la position avancée.

Selon l'invention :
- chaque organe de verrouillage et le poussoir sont configurés pour être attirés magnétiquement l'un vers l'autre, et
- le poussoir est apte à entrainer magnétiquement chaque organe de verrouillage vers sa position proximale lorsque le poussoir est déplacé vers sa position arrière.

Grâce à l'invention, lors de l'accouplement du raccord rapide, la paroi du poussoir repousse les organes de verrouillage sur l'élément mâle, ce qui sécurise l'accouplement. Lors du désaccouplement du raccord, l'élément mâle est déverrouillé simplement en déplaçant la paroi du poussoir vers sa position arrière, sans qu'aucun organe mécanique supplémentaire autre que le poussoir ne soit nécessaire. L'élément femelle selon l'invention est donc particulièrement simple à réaliser. L'absence de liaison mécanique entre le poussoir et les organes de verrouillage permet de limiter les surépaisseurs lors de la conception de l'élément femelle, qui reste peu encombrant.

Selon des aspects avantageux mais non obligatoires de l'invention, un tel élément femelle peut incorporer une ou plusieurs des caractéristiques suivantes prises isolément ou selon toute combinaison techniquement admissible :
- Le poussoir est solidaire de la bague de manœuvre.
- Le poussoir est une bague de rappel, qui est centrée sur l'axe central de l'élément femelle, qui est mobile en translation par rapport à la bague de manœuvre, et qui est interposée radialement entre la bague de manœuvre et le corps femelle.
- la bague de manœuvre comprend une butée axiale, tandis que l'élément femelle comprend un deuxième organe de rappel, qui est configuré pour repousser la bague de rappel dans sa position avancée contre la butée axiale.
- L'organe de verrouillage est une bille.
- L'organe de verrouillage est un pion, qui s'étend selon un axe de guidage du logement.
- Au moins un élément parmi, d'une part, chaque organe de verrouillage et, d'autre part, le poussoir, est magnétique et est apte à attirer magnétiquement respectivement le poussoir ou chaque organe de verrouillage.
- Chaque organe de verrouillage et le poussoir sont réalisés dans un matériau ferromagnétique ou sont revêtus d'une couche de matériau ferromagnétique.
- Le poussoir ou chaque organe de verrouillage comprend un insert ferromagnétique orienté vers respectivement chaque organe de verrouillage ou le poussoir.
- Le corps femelle comprend un corps avant, dans lequel est ménagé chaque logement, tandis que le corps avant est réalisé dans un matériau amagnétique.
- L'élément femelle comprend un manchon élastique, qui est disposé axialement et s'étend de manière continue entre le corps et la bague de manœuvre et qui se déforme élastiquement lorsque la bague de manœuvre est déplacée entre les positions avancée et reculée.
- La paroi du poussoir s'étend selon un cône de révolution centré sur l'axe central, le cône étant ouvert vers l'avant et présentant, par rapport à l'axe central, un angle au sommet de préférence égal à 40°.
- L'élément femelle comprend un clapet d'obturation du canal d'insertion, le clapet étant mobile le long de l'axe central de l'élément femelle.
- Le poussoir comprend une paroi radiale, qui est configurée pour attirer magnétiquement l'organe de verrouillage et qui s'étend parallèlement à l'axe central selon une longueur supérieure ou égale à une course de la bague de manœuvre entre sa position avancée et sa position reculée, moins une valeur de déplacement axial de l'organe de verrouillage entre sa position distale et sa position proximale.
- L'organe de rappel de la bague de manœuvre comprend un ressort, qui est interposé radialement entre le corps femelle et la bague de manœuvre.

L'invention concerne aussi un raccord rapide conçu pour la jonction de canalisations de fluide sous pression, le raccord rapide comprenant :
- un élément femelle tel que défini précédemment, et
- un élément mâle complémentaire de l'élément femelle, l'élément mâle étant configuré pour être accouplé avec l'élément femelle dans une configuration accouplée du raccord,
dans lequel :
- l'élément mâle comprend un corps mâle, qui est apte à être reçu dans le canal d'insertion du corps femelle et qui s'étend selon un axe principal, l'axe principal de l'élément mâle et l'axe central de l'élément femelle étant coaxiaux lorsque le corps mâle est reçu dans le canal d'insertion de l'élément femelle,
- le corps mâle comprend une première surface, qui est apte à repousser les organes de verrouillage dans leur position proximale lorsque le corps mâle est inséré dans le canal d'insertion, et
- la première surface est inclinée, par rapport à l'axe principal, d'un angle compris entre 20° et 40°, par exemple égal à 30°.

Avantageusement :
- Le corps mâle comprend une deuxième surface, qui est apte à coopérer avec les organes de verrouillage alors que les organes de verrouillage sont en position distale de manière à empêcher le retrait axial du corps mâle, la deuxième surface étant inclinée par rapport à l'axe principal et formant avec l'axe principal un angle compris entre 30 et 60°, par exemple égale à 45°.
- L'élément mâle comprend un capot protecteur, qui est configuré pour prendre appui sur une paroi annulaire de la bague de manœuvre, en configuration accouplée du raccord rapide.

L'invention sera mieux comprise, et d'autres avantages de celle-ci apparaîtront plus clairement à la lumière de la description qui va suivre, de plusieurs modes de réalisation d'un élément femelle de raccord rapide et d'un raccord rapide, conformes à son principe, donnée uniquement à titre d'exemple et faite en référence aux dessins annexés, dans lesquels :
- [Fig 1] la figure 1 est une coupe longitudinale d'un raccord rapide, conforme à un premier mode de réalisation de l'invention, comprenant un élément femelle et un élément mâle associé, représentés dans une première configuration dite déconnectée ;
- [Fig 2] la figure 2 est une coupe longitudinale du raccord rapide de la figure 1, représenté dans une première configuration intermédiaire, au cours d'un mouvement d'accouplement du raccord rapide ;
- [Fig 3] la figure 3 est une coupe longitudinale du raccord rapide de la figure 1, représenté dans une deuxième configuration intermédiaire au cours du mouvement d'accouplement ;
- [Fig 4] la figure 4 est une coupe longitudinale du raccord rapide de la figure 1, représenté dans une troisième configuration intermédiaire, au cours d'un mouvement d'accouplement du raccord rapide
- [Fig 5] la figure 5 est une coupe longitudinale du raccord rapide de la figure 1, représenté dans une configuration finale du mouvement d'accouplement, dite configuration accouplée ;
- [Fig 6] la figure 6 est une coupe longitudinale du raccord rapide de la figure 1, représenté dans une quatrième configuration intermédiaire, site configuration intermédiaire de déverrouillage, au cours d'un mouvement de découplage,
- [Fig 7] la figure 7 est une coupe longitudinale du raccord rapide de la figure 1, représenté dans une cinquième configuration intermédiaire dite configuration déverrouillée, au cours du mouvement de découplage ;
- [Fig 8] la figure 8 est une coupe longitudinale d'un raccord rapide, conforme à un deuxième mode de réalisation de l'invention, comprenant un élément femelle et un élément mâle associé, représentés dans la configuration accouplée ;
- [Fig 9] la figure 9 est une coupe longitudinale du raccord rapide de la figure 8, représenté dans la configuration intermédiaire de déverrouillage ;
- [Fig 10] la figure 10 une coupe longitudinale du raccord rapide de la figure 8, représenté dans la configuration déverrouillée ;
- [Fig 11] la figure 11 est une coupe longitudinale d'un raccord rapide, conforme à un troisième mode de réalisation de l'invention, comprenant un élément femelle et un élément mâle associé, représentés dans la configuration accouplée ;
- [Fig 12] la figure 12 une coupe longitudinale du raccord rapide de la figure 11, représenté dans la configuration intermédiaire de déverrouillage ;
- [Fig 13] la figure 13 est une coupe longitudinale d'un raccord rapide, conforme à un quatrième mode de réalisation de l'invention, comprenant un élément femelle et un élément mâle associé, représentés dans la configuration accouplée, et
- [Fig 14] la figure 14 une coupe longitudinale du raccord rapide de la figure 13, représenté dans la configuration intermédiaire de déverrouillage.

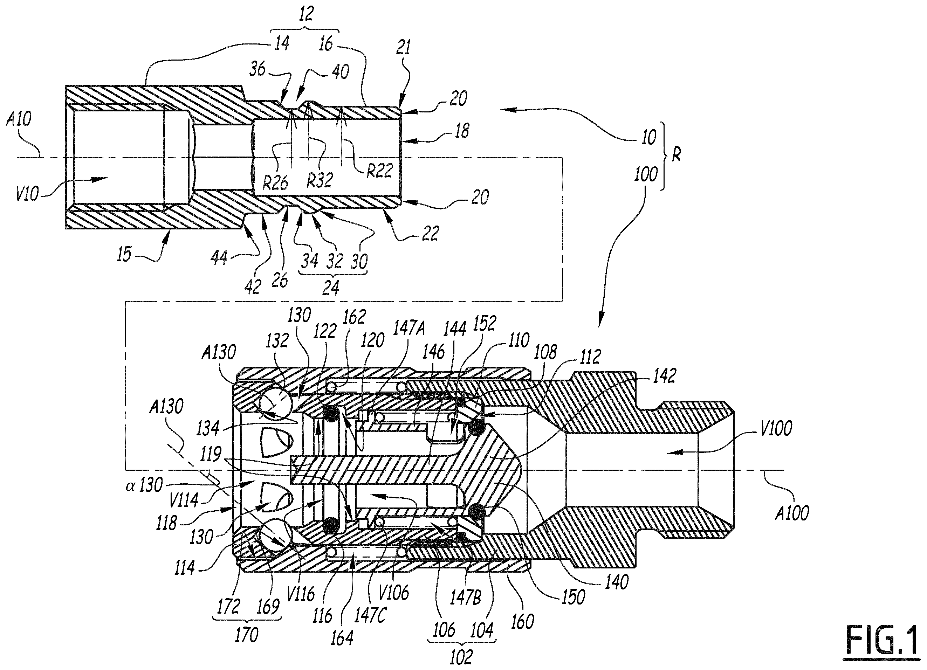

La figure 1 représente un raccord rapide R conforme à un premier mode de réalisation de l'invention. Le raccord rapide R, dit aussi simplement raccord R dans la suite, comprend un élément mâle 10, sur le haut de la figure 1, et un élément femelle 100 associé, sur le bas de la figure 1. Sur la figure 1, le raccord R est représenté dans une configuration déconnectée, dans laquelle l'élément mâle 10 et l'élément femelle 100 sont séparés l'un de l'autre. Lors de la connexion de l'élément mâle 10 à l'élément femelle 100, l'élément mâle est placé en regard de l'élément femelle 100. Un côté avant de l'élément mâle 10 est ainsi orienté vers l'élément femelle 100, c'est-à-dire ici vers la droite des figures, tandis qu'un côté arrière de l'élément mâle 10 est orienté à l'opposé du côté avant de l'élément mâle 10, c'est-à-dire ici vers la gauche des figures. De manière symétrique, un côté avant de l'élément femelle 100 est orienté vers l'élément mâle 10, soit ici vers la gauche des figures, tandis qu'un côté arrière de l'élément femelle 100 est orienté à l'opposé du côté avant de l'élément femelle 100, soit ici vers la droite des figures.

Pour chacun des éléments mâle 10 ou femelle 100 du raccord R, les notions de « distal » et proximal » sont équivalentes aux notions d'« avant » et « arrière » associées à l'élément mâle 10 ou femelle 100 correspondant. À titre d'illustration, pour l'élément femelle 100, un composant proximal ou une position proximale désigne un composant ou une position situé du côté arrière de l'élément femelle 100, une surface proximale désigne une surface orientée vers l'arrière de l'élément femelle 100. Pour un axe donné, une direction radiale à cet axe est une direction orthogonale à cet axe. Un plan transversal à cet axe est un plan orthogonal à cet axe. Un plan radial à cet axe est un plan qui porte cet axe. Une direction orthoradiale à cet axe est une direction orthogonale à un plan radial à cet axe, sans toutefois couper cet axe.

On décrit tout d'abord l'élément mâle 10.

L'élément mâle 10 est ici un about, qui comprend un corps mâle 12 tubulaire présentant une forme globalement de révolution autour d'un axe central A10. Le corps mâle 12 délimite un conduit V10 pour la circulation de fluide. Par extension, le conduit V10 définit un côté interne de l'élément mâle 10, l'élément mâle 10 séparant le côté interne d'un côté externe de l'élément mâle 10. Le côté externe de l'élément mâle 10 est ici une surface de révolution, orientée de manière centrifuge à l'axe central A10.

Le corps mâle 12 comprend une partie arrière 14, qui est ici taraudée et qui est configurée pour être fluidiquement connectée à une canalisation. La canalisation n'est pas représentée. La partie arrière 14 présente, du côté externe, une surface de préhension 15. La surface de préhension 15 est ici une surface cylindrique, par exemple à section hexagonale.

Le corps mâle 12 comprend une portion avant, dite portion distale 16, qui est conçue pour être emmanchée dans l'élément femelle 100 en configuration accouplée du raccord R. La partie arrière 14 et la portion avant 16 sont ici réalisées d'une seule pièce.

Le conduit interne V10 débouche de la portion distale 16 par une embouchure 18, qui est orientée vers l'avant de l'élément mâle 10, autrement dit l'embouchure 18 de l'élément mâle 10 est orientée vers l'élément femelle 100 en configuration déconnectée du raccord R.

Du côté externe de l'élément mâle 10, la portion distale 16 comprend, à mesure que l'on s'éloigne de l'embouchure 18 vers l'arrière de l'élément mâle 10, une paroi annulaire 20, un chanfrein extrêmal 21, une première portion cylindrique 22, une collerette 24, et une deuxième portion cylindrique 26.

La paroi annulaire 20 s'étend ici orthogonalement à l'axe principal A10. La paroi annulaire 20 forme des moyens d'appui de l'élément mâle 10, qui sont configurés pour coopérer avec certains organes l'éléments femelle 100, cet aspect étant décrit plus loin.

Le chanfrein extrêmal 21 présente une surface inclinée par rapport à l'axe principal A10. Le chanfrein extrêmal 21 est ici géométriquement porté par un cône divergent vers l'arrière de l'élément mâle 10.

La première portion cylindrique 22 présente une section circulaire centrée sur l'axe principal A10 et comprend une surface cylindrique externe présentant rayon externe R22 constant. La deuxième portion cylindrique 26 présente une section circulaire centrée sur l'axe principal A10 et présente un rayon externe R26 constant.

Dans l'exemple illustré, le rayon externe R22 de la première portion cylindrique 22 est différent du rayon externe R26 de la deuxième portion cylindrique 26. De préférence, le rayon externe R22 de la première portion cylindrique 22 est strictement supérieur au rayon externe R26 de la deuxième portion cylindrique 26. En variante non représentée, les rayons externes R22 et R26 sont égaux.

La collerette 24 relie la première portion cylindrique 22 à la deuxième portion cylindrique 26. La collerette 22 s'étend radialement en saillie à la fois par rapport à la première portion cylindrique 22 et à la deuxième portion cylindrique 26.

La collerette 22 est ici formée d'une rampe avant, dite première surface 30, d'une partie centrale 32 et d'une rampe arrière, dite deuxième surface 34.

La partie centrale 32 est ici une portion de cylindrique de section circulaire centrée sur l'axe principal A10. La partie centrale 32 de la collerette 24 présente un rayon R32, qui est supérieur aux rayons R22 et R26 des première et deuxième portions cylindriques 22 et 26.

La première surface 30 relie la première portion cylindrique 22 à la partie centrale 32. La première surface 30 est une surface tronconique, qui est centrée sur l'axe principal A10 et qui est divergente vers l'arrière de l'élément mâle 10. La première surface 30 est inclinée, par rapport à l'axe principal A10, d'un angle compris préférentiellement entre 20° et 40°, par exemple égal à 30°, comme dans l'exemple de la figure 1.

La deuxième surface 34 relie la partie centrale 32 à la deuxième portion cylindrique 26. La deuxième surface 30 est une surface tronconique qui est centrée sur l'axe principal A10 et qui est convergente vers l'arrière de l'élément mâle 10. La deuxième surface 34 est inclinée, par rapport à l'axe principal A10, d'un angle compris préférentiellement entre 30° et 60°, par exemple égal à 45°, comme dans l'exemple de la figure 1.

La portion distale 16 comprend aussi, du côté externe de l'élément mâle 10, une troisième surface 36, qui est reliée à la deuxième surface 34 par l'intermédiaire de la deuxième portion cylindrique 26. La troisième surface 36 est une surface tronconique, qui est centrée sur l'axe principal A10 et qui est divergente vers l'arrière de l'élément mâle 10. Dans l'exemple illustré, la troisième surface 36 est inclinée, par rapport à l'axe principal A10, d'un angle égal à 45°. De préférence, l'angle d'inclinaison de la troisième surface 36 par rapport à l'axe principal A10 est égal, en valeur absolue, à l'angle d'inclinaison de la deuxième surface 34 par rapport à l'axe principal A10.

La deuxième surface 34, la deuxième portion cylindrique 26 et la troisième surface 36 forment ensemble une gorge 40, située à l'arrière de la collerette 24, la deuxième portion cylindrique 26 formant un fond de cette gorge 40, tandis que la deuxième surface 34 forme une surface distale de cette gorge 40, et que la troisième surface 36 forme une surface proximale de cette gorge 40.

De l'avant vers l'arrière de l'élément mâle 10, la troisième surface 36 est ici reliée à la surface de préhension 15 par une troisième portion cylindrique 42 et par un épaulement 44.

On décrit à présent l'élément femelle 100 du raccord rapide R.

L'élément femelle 100 comprend un corps femelle 102, qui présente une forme globalement de révolution autour d'un axe central A100. Le corps femelle 102 est creux et délimite un conduit V100 pour la circulation de fluide. Le conduit V100 définit un côté interne de l'élément femelle 100, lequel sépare le côté interne d'un côté externe de l'élément femelle 100. Lorsque le raccord rapide R est en configuration accouplée, le conduit V10 de l'élément mâle 10 est fluidiquement connecté au conduit V100 de l'élément femelle 100, l'axe principal A10 et l'axe central A100 étant coaxiaux. L'axe central A100 est aussi dit axe d'emmanchement.

Le corps femelle 102 comprend un corps arrière 104 et un corps avant 106, qui sont deux corps creux de révolution assemblés ici l'un à l'autre par vissage. Dans ce mode de réalisation, l'élément femelle 100 comprend une bague d'appui 108, qui est intercalée axialement entre le corps arrière 104 et le corps avant 106. La bague d'appui 108 loge avantageusement un joint distal 110 d'étanchéité, qui contribue à l'étanchéité du vissage du corps arrière 104 au corps avant 106. La bague d'appui 108 présente une forme de révolution autour de l'axe central A100 et comprend une paroi chanfreinée 112, qui est orientée vers l'axe central A100 et vers l'arrière de l'élément femelle 100. Autrement dit la bague d'appui 108 est chanfreinée sur un diamètre intérieur.

Du coté interne, le corps avant 106 délimite un canal d'insertion V106 pour l'élément mâle 10. Le canal d'insertion V106 est une portion du conduit V100 de l'élément femelle 100. Le corps avant 106 comprend une portion d'insertion 114, qui présente une forme annulaire centrée sur l'axe central A100 et qui délimite une enceinte avant V114 configurée pour recevoir et pour guider l'élément mâle 10 lors de l'emmanchement - ou insertion - de l'élément mâle 10 dans l'élément femelle 100, et une portion proximale 116, qui présente une forme annulaire centrée sur l'axe central A100, qui est située à l'arrière de la portion d'insertion 114 et qui délimite un espace proximal V116. L'enceinte avant V114 et l'espace proximal V116 sont des portions du canal d'insertion V106. L'enceinte avant V114 débouche vers l'avant du corps femelle 102 par une embouchure 118.

L'espace proximal V116 est configuré pour recevoir l'élément mâle 10, en particulier pour recevoir la première portion cylindrique 22 de l'élément mâle 10. La portion proximale 116 comprend des surfaces de guidage 119, qui sont configurées pour guider l'élément mâle 10, et une gorge 120, qui est ménagée en creux dans la portion proximale 116 et qui loge un joint annulaire 122. Le joint annulaire 122 est configuré pour assurer une étanchéité entre l'élément mâle 10 et l'élément femelle 100 lorsque l'élément mâle 10 est reçu dans l'espace proximal V116. Ainsi, un diamètre interne du joint annulaire 122 est légèrement inférieur à un diamètre externe de la première portion cylindrique 22, le joint annulaire 122 étant déformable élastiquement pour accommoder le passage de l'élément mâle 10. Dans l'exemple illustré, la portion proximale 116 comprend deux surfaces de guidage 119, qui sont situées de part et d'autre de la gorge 120.

Le corps avant 106 comprend plusieurs logements 130, ici au nombre non limitatif de six, qui sont ménagés dans l'épaisseur du corps femelle 100, ici au travers du corps avant 106. De préférence, les logements 130 sont répartis sur la périphérie du corps avant 106 autour de l'axe central A100. Chaque logement 130 est configuré pour recevoir un organe de verrouillage respectif. Dans le premier mode de réalisation, les organes de verrouillage sont avantageusement des billes 132, qui sont largement commercialisées et peu chères.

Chaque logement 130 débouche dans le canal d'insertion V106, en particulier dans l'enceinte avant V114. Chaque logement 130 est ici ménagé par usinage, en particulier par perçage, de sorte qu'un fond 134 du perçage forme une butée, qui obture partiellement chaque logement 130 de manière à empêcher la bille 132 reçue dans le logement 130 de passer complètement dans le canal d'insertion V106. Autrement dit chaque logement 130 est ouvert sur le canal d'insertion V106. La forme du fond 134 de chaque logement 130 n'est pas limitative. En variante non représentée, le fond 134 du perçage est dimensionnellement adapté notamment en réduisant ou en augmentant la taille de l'ouverture sur le canal d'insertion V106, tout en préservant une butée, ici formée par le fond 134, qui empêche les billes 132 de passer complètement dans le canal d'insertion V106.

Pour chaque logement 130 recevant une bille 132, lorsque cette bille 132 est en appui contre le fond 134 du logement correspondant, cette bille 132 est dans une position dite distale, dans laquelle cette bille 132 dépasse dans le canal d'insertion V106. Chaque logement 130 présente une forme allongée selon un axe de guidage A130, de sorte que chaque bille 132 est mobile entre la position distale et une position dite proximale, dans laquelle la bille 132 ne dépasse pas dans le canal d'insertion V106. Comme détaillé plus loin, chaque logement 130 est incliné, aussi la position distale de chaque bille 132 est une position avant, tandis que la position proximale est une position arrière. Autrement dit, la bille 132 atteint, dans sa position proximale, une position radiale plus éloignée de l'axe central A100 que dans la position distale. Notamment, dans la position proximale de la bille 132, un élément mâle 10 préalablement inséré dans le canal d'insertion V106 peut être retiré librement du canal d'insertion V106.

Du côté externe de l'élément femelle 100, chaque logement 130 débouche totalement sur l'extérieur du corps femelle 102, c'est-à-dire que chaque logement présente une ouverture suffisante pour autoriser l'insertion de la bille 132 correspondant lors de la fabrication et du montage de l'élément femelle 100.

Chaque logement 130 s'étend ici le long d'un axe de guidage A130 incliné par rapport à l'axe central A100. Par incliné, on entend que chaque axe de guidage A130 forme, par rapport à l'axe central A100, un angle de 0° à 80°, de préférence de 20 à 70°, de préférence encore 30 à 50°. Les axes de guidage A130 sont ici géométriquement portés par un cône, qui est centré sur l'axe central A100 et qui diverge vers l'arrière de l'élément femelle A100, chaque axe de guidage A130 formant, avec l'axe central A100, un angle de guidage α130 qui est ici égal à 40°, cette valeur n'étant pas limitative. Autrement dit, les logements 130 sont inclinés, vers l'arrière de l'élément femelle 130, de 40° par rapport à l'axe central A100.

Chaque bille 132 est reçue dans le logement 130 correspondant avec un jeu dimensionnel, de manière à ne pas gêner les mouvements de translation de la bille 132 le long de l'axe de guidage 130. Chaque bille 132 est ainsi guidée en translation le long de l'axe de guidage A130 associé à ce logement 130.

Dans le premier mode de réalisation, les billes 132 sont « magnétiques », c'est-à-dire présentent une aimantation permanente. Autrement dit, les billes 132 présentent des propriétés de rémanence magnétique et sont ainsi susceptible d'attirer un autre élément réalisé en matériau ferromagnétique. Les billes 132 magnétiques sont ici réalisés dans un matériau à forte susceptibilité magnétique, par exemple en néodyme. Les billes 132 présentent ici une rémanence magnétique de l'ordre de 1,3°T - Tesla -.

Le corps avant 106, dans lequel sont percés les logements 130, est réalisé en un matériau amagnétique, c'est-à-dire un matériau qui n'est pas susceptible d'être attiré ou repoussé par un aimant. On considère comme amagnétique un matériau dont la susceptibilité magnétique est faible, par exemple inférieure à 10⁻³. Dans l'exemple illustré, le corps avant 106 est réalisé en laiton. Ainsi les billes 132 ne sont pas attirées par le corps avant 106.

De manière analogue, le corps mâle 12 est réalisé en un matériau amagnétique. Les billes 132 ne sont pas attirées par le corps mâle 10. Dans l'exemple illustré, le corps mâle 12 est réalisé en laiton.

L'élément femelle 100 comprend aussi un clapet 140, qui est reçu dans le conduit V100 de l'élément femelle 100. Le clapet 140 est guidé en translation le long de l'axe central A100 entre une position distale, dans laquelle le clapet 140 obture le canal d'insertion V106 de l'élément femelle 100, et une position proximale, dans laquelle le clapet 140 n'empêche pas le passage fluidique dans le canal d'insertion V106 de l'élément femelle 100.

Dans l'exemple de la figure 1, le clapet 140 comprend un corps central en forme de champignon, avec une tête 142 et une tige 144. Dans l'exemple illustré, la tête 142 du clapet 140 est vue en coupe et présente une forme globalement triangulaire, en particulier conique, tandis que la tige 144 présente une forme de cylindre de section circulaire aligné sur l'axe central A100.

Le clapet 140 comprend aussi une enveloppe cylindrique 146 externe, qui s'étend depuis la tête 142 en regard et à distance de la tige 144. L'enveloppe cylindrique 146 présente ici une section circulaire centrée sur l'axe central A100 lorsque l'élément femelle 100 est assemblé, comme représenté sur les figures. L'enveloppe cylindrique 146 comprend une extrémité arrière, par laquelle l'enveloppe cylindrique 146 est liée à la tête 142, et une extrémité avant, opposée à l'extrémité arrière.

Le clapet 140 comprend aussi une collerette externe 147A, qui est ici ménagée radialement en saillie sur l'enveloppe cylindrique 146 à proximité de l'extrémité avant de l'enveloppe cylindrique 146. La collerette 147A est reçue dans un lamage 147B ménagé dans la partie avant 106, de manière à guider le clapet 140 en translation par rapport au corps femelle 102 le long de l'axe central A100. Le lamage 147B est ici usiné dans la partie avant 106 du corps femelle 102. Du côté avant, le lamage 147B présente un fond qui forme une butée avant pour la collerette 147A, tandis que du côté arrière, le lamage 147B débouche sur une face avant de la bague d'appui 108. L'élément femelle 100 comprend aussi un organe de rappel, ici un ressort de rappel 147C, qui est reçu dans le lamage 147B entre l'enveloppe cylindrique 146 et le corps avant 106. Le ressort de rappel 147C prend appui, d'une part, sur un côté arrière de la collerette 147A et, d'autre part, sur la face avant de la bague d'appui 108, entrainant le clapet 140 vers l'avant de l'élément femelle 100, c'est-à-dire entrainant le clapet 140 vers sa position distale.

La tête 142 du clapet 140 comprend une rainure extérieure annulaire, qui reçoit un joint de clapet 150. Le joint de clapet 150 présente un diamètre supérieur à un diamètre interne de la bague d'appui 108, de sorte que la paroi chanfreinée 112 de la bague d'appui 108 forme un siège d'étanchéité pour le joint de clapet 150. Lorsque le clapet 140 est dans la position distale, le joint de clapet 150 est en appui étanche contre la paroi chanfreinée 112, empêchant tout passage de fluide entre la tête 142 du clapet 140 et la bague d'appui 108, obturant ainsi le conduit V100 de l'élément femelle 100. Si, pour une raison quelconque, le joint de clapet 150 est éjecté de la gorge ménagée dans la tête 142, par exemple en cas de rupture du joint de clapet 150, la collerette 147A est configurée pour arrêter le clapet 140 vers l'avant de l'élément femelle 100, la collerette 147A venant en butée contre le fond du lamage 147B.

L'enveloppe cylindrique 146 comprend au moins un évidement 152, ici trois évidements 152, qui forment des passages du fluide au travers du clapet 140 lorsque le clapet 140 n'est pas en position distale.

On comprend qu'en l'absence de force extérieure, le ressort de rappel 147C repousse le clapet dans sa position distale, obturant le conduit V100 de manière étanche. Lorsqu'un effort axial, parallèle à l'axe central A100 et orienté vers l'arrière de l'élément femelle 100, est exercé sur le clapet 140, cet effet étant exercé par exemple sur l'extrémité avant de l'enveloppe cylindrique 146 ou sur la tige 144, cet effort tend à déplacer le clapet vers sa position proximale à l'encontre du ressort de rappel 147C, autorisant le passage fluidique au travers du conduit V100 de l'élément femelle 100.

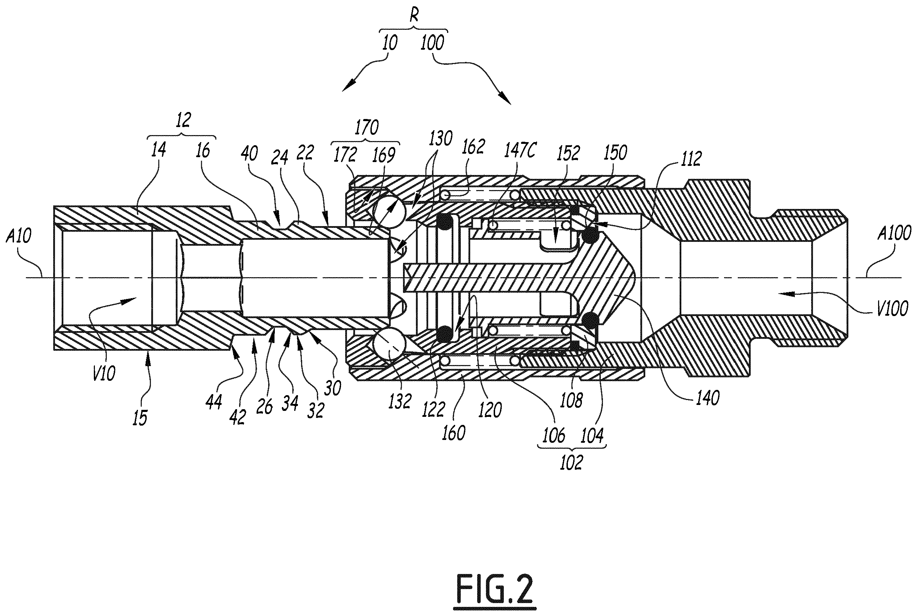

L'élément femelle 100 comprend aussi une bague de manœuvre 160. La bague de manœuvre 160 présente une forme de révolution autour de l'axe central A100 et est agencée autour du corps femelle 102. La bague de manœuvre 160 est guidée en translation le long de l'axe central A100, autrement dit est mobile en translation par rapport au corps femelle 102 le long de l'axe central A100, entre une position avancée et une position reculée. Sur les figures 1 et 2, la bague de manœuvre 160 est représentée en position avancée.

L'élément femelle 100 comprend aussi un organe de rappel, ici un ressort de verrouillage 162, qui repousse la bague de manœuvre 160 de sa position reculée vers sa position avancée. Le ressort de verrouillage 162 est ici reçu dans un logement radial 164 ménagé entre le corps femelle 102 et la bague de manœuvre 160. La bague de manœuvre 160 comprend une paroi inclinée 169, qui appartient à un poussoir 170. Dans le premier mode de réalisation, le poussoir 170 est une portion de la bague de manœuvre 160. La paroi 169 du poussoir 170 est géométriquement portée par un cône qui diverge vers l'avant de l'élément femelle 100. La paroi 169 de poussoir 170 présente ici un profil tronconique, qui est incliné par rapport à l'axe central A100. La paroi 169 de poussoir 170 est inclinée par rapport à l'axe central A100 selon un angle qui est ici égal à 50°. En variante un autre angle pourrait être utilisé, par exemple la paroi inclinée 169 du poussoir 170 pourrait être inclinée d'un angle de 40° par rapport à l'axe central A100. De préférence, l'axe de guidage A130 de chaque logement 130 est orthogonal à la paroi 169 du poussoir 170, comme dans l'exemple illustré. Alternativement, l'axe de guidage A130 de chaque logement 130 est incliné par rapport à la paroi 169 du poussoir 170.

Dans le premier mode de réalisation, le poussoir 170 est solidaire de la bague de manœuvre 160, c'est-à-dire que les mouvements du poussoir 170 sont identiques aux mouvements de la bague de manœuvre 160. Lorsque la bague de manœuvre 160 est dans la position avancée, le poussoir 170 est dans une position avant, tandis que lorsque la bague de manœuvre 160 est dans la position reculée, le poussoir 170 est dans une position arrière. Autrement dit la bague de manœuvre 160 est configurée pour entrainer le poussoir 170 de la position avant vers la position arrière lorsque la bague de manœuvre 160 est déplacée de la position avancée vers la position reculée, et ce sans organe mécanique additionnel.

Dans la configuration désaccouplée illustrée à la figure 1, la bague de manœuvre 160 est repoussée par le ressort de verrouillage 162 vers sa position avancée, repoussant chaque bille 132 vers sa position distale. Par extension, le poussoir 170 maintient chaque bille 132 en position distale. De préférence, un jeu dimensionnel minimal est prévu entre chaque bille 132 et le poussoir 170, de manière à soulager les efforts exercés sur les billes 132 ou sur les autres pièces de l'élément femelle 100.

En variante non illustrée, en configuration désaccouplée du raccord R, le poussoir 170 est en appui contre les billes 132 par l'intermédiaire de la paroi 169, chaque bille 132 étant en butée contre le fond 134 du logement 130 correspondant.

Dans le premier mode de réalisation, la bague de manœuvre 160 est réalisée en un matériau ferromagnétique, c'est-à-dire un matériau susceptible d'être attiré par les billes 132, ici fabriquées en néodyme. Autrement dit, chaque bille 132 - et plus généralement chaque organe de verrouillage - et le poussoir 170 sont configurés pour être attirés magnétiquement l'un vers l'autre. Dans le premier mode de réalisation de l'invention, la bague de manœuvre 160 est réalisé en acier inoxydable ferromagnétique.

De manière schématique, chaque bille 132 se déplace le long de l'axe de guidage A130 correspondant, tandis que le poussoir 170 se déplace parallèlement à l'axe central A100. On comprend que lorsque l'élément femelle 100 est dans la configuration de la figure 1, si un utilisateur déplace la bague de manœuvre 160 vers sa position reculée à l'encontre du ressort de verrouillage 162, c'est-à-dire vers l'arrière de l'élément femelle 100, alors chaque bille 132, attirée par la bague de manœuvre 160, est entrainée de la position distale vers la position proximale. Autrement dit le poussoir 170 est apte à entrainer magnétiquement chaque bille 132 vers sa position proximale lorsque le poussoir 170 est déplacé vers sa position arrière. Par extension, lorsque le poussoir 170 est dans la position arrière, chaque bille 132 est dans sa position proximale. Le fait que la paroi 169 soit inclinée par rapport à l'axe principal A100 et perpendiculaire à l'axe de guidage A130 des logements 130 facilite la coopération magnétique de la paroi 169 avec les billes 132, ce qui favorise le guidage des billes 132 de leur position distale vers leur position proximale.

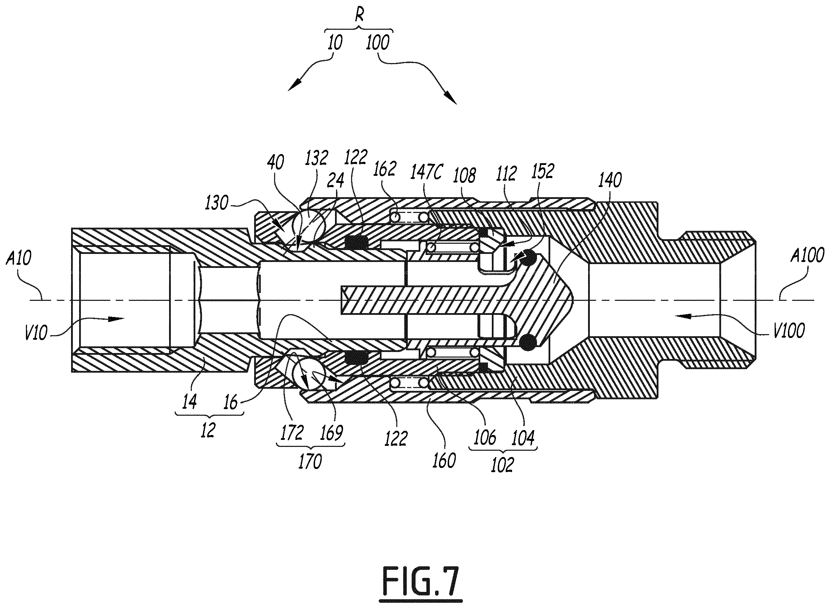

Dans le premier mode de réalisation, le poussoir 170 comprend avantageusement une paroi radiale 172, qui s'étend parallèlement à l'axe central A100 du côté avant de la paroi 169 du poussoir 170, la paroi radiale 172 étant orientée vers l'axe central A100. Comme représenté sur la figure 7, la paroi radiale 172 sert à maintenir un contact entre les billes 132 et la bague de manœuvre 160, de manière à maintenir chaque bille 132 en position proximale même lorsque la bague de manœuvre 160 est déplacée vers sa position reculée. Plus généralement, la paroi radiale 172 est configurée pour attirer magnétiquement chaque bille 132.

De préférence, la paroi radiale 172 du poussoir 170 s'étend parallèlement à l'axe central selon une longueur supérieure ou égale à une course de la bague de manœuvre 160 entre sa position avancée et sa position reculée, moins une valeur d'un déplacement axial de chaque bille 132 par rapport à l'axe central A100, entre sa position distale et sa position proximale, de manière à maintenir le contact entre les billes 132 et la bague de manœuvre 160 quelle que soit la position de la bague de manœuvre 160. La course de la bague de manœuvre 160 et la valeur du déplacement axial de chaque bille 132 sont mesurés parallèlement à l'axe central A100.

On décrit à présent le fonctionnement du raccord rapide R, notamment une séquence d'accouplement de l'élément mâle 10 et de l'élément femelle 100, en référence aux figures 1 à 5.

Sur la figure 1, le raccord R est dans la configuration désaccouplée. L'élément femelle 100 maintient le conduit V100 interne fermé au moyen du clapet 140, qui est repoussé en position distale grâce au ressort de rappel 147C, le joint de clapet 150 étant en appui étanche contre la paroi chanfreinée 112 de la bague d'appui 108. La bague de manœuvre 160 est maintenue en position avancée par le ressort de verrouillage 162, le poussoir 170 repoussant chaque bille 132 en position distale. Les billes 132 dépassent dans le canal d'insertion V106.

En référence à la figure 2, un opérateur présente l'élément mâle 10 face à l'élément femelle 100, l'axe principal A10 étant aligné sur l'axe central A100, le côté avant de l'élément mâle 10 étant situé en regard du côté avant de l'élément femelle 100. L'opérateur approche ensuite l'élément mâle 10 de l'élément femelle 100 selon un mouvement d'insertion, qui est un mouvement de translation parallèle à l'axe central A100. L'élément mâle 10 est ainsi inséré dans le canal d'insertion V106 de l'élément femelle 100. Les billes 132 prennent appui sur le chanfrein extrêmal 21 du corps mâle 12. Le raccord R est alors dans la configuration de la figure 2.

Alors que le mouvement d'insertion se poursuit, le chanfrein extrêmal 21 repousse légèrement chaque bille 132 dans son logement 130 respectif, ce qui repousse aussi le poussoir 170. Autrement dit, l'élément mâle 10 repousse chaque bille 132 de la position distale - ou avant - vers la position proximale, chaque bille 132 exerçant une force sur la paroi 169 du poussoir 170 et repoussant le poussoir 170 de sa position avant vers sa position arrière. Dans le premier mode de réalisation, ceci a aussi pour effet de repousser légèrement la bague de manœuvre 160 vers l'arrière, à l'encontre du ressort de verrouillage 162. On comprend que si, pour une raison quelconque, le poussoir 170 ou la bague de manœuvre 160 sont bloqués, alors le mouvement d'insertion de l'élément mâle 10 est empêché, ce qui apporte une sécurité en cas de dysfonctionnement de l'élément femelle 100.

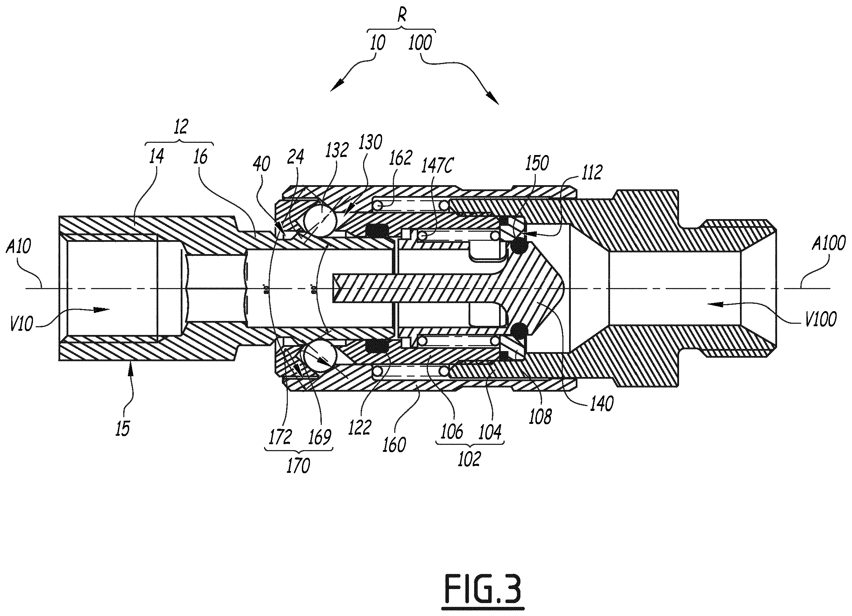

Alors que le mouvement d'insertion se poursuit, les billes 132 sont en appui contre la première portion cylindrique 22, le mouvement se poursuivant jusqu'à ce que la collerette 24 de l'élément mâle 10 arrive en contact des billes 132. En particulier, la première surface 30 vient en contact des billes 132. Le raccord rapide R est alors dans la configuration de la figure 3. Le clapet 140 est encore en position distale, tandis que le joint annulaire 122 assure déjà l'étanchéité entre l'élément femelle 100 et l'élément mâle 10.

À partir de la configuration de la figure 3, alors que le mouvement d'insertion se poursuit, les billes 132 sont repoussés par la première surface 30 de l'élément mâle 10 de façon automatique, c'est-à-dire sans action manuelle supplémentaire autre que l'insertion de l'élément mâle 10 dans l'élément femelle 100, en particulier sans action axiale sur la bague de manœuvre 160. Le clapet 140 est maintenu fermé. Les billes 132 repoussent le poussoir 170, et donc ici repoussent la bague de manœuvre 160, à l'encontre du ressort de verrouillage 162. On comprend que l'effort nécessaire pour poursuivre le mouvement d'insertion dépend, notamment, d'une raideur du ressort de verrouillage 162, de l'angle d'inclinaison de la première surface 30, et de l'angle d'inclinaison de la surface inclinée formant le poussoir 170.

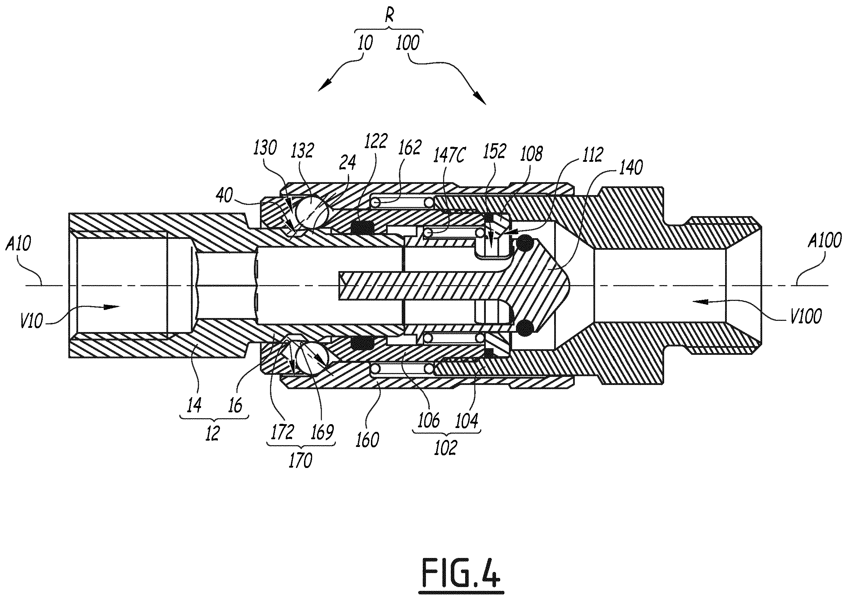

Alors que le mouvement d'insertion se poursuit, les billes 132 atteignent le haut de la première surface 30 de la collerette 24, puis les billes 132 sont en appui contre la partie centrale 32 de collerette 24. Les billes 132 sont alors dans une position la plus éloignée de l'axe central A100. La paroi annulaire 20 du corps mâle 10 vient en contact contre le clapet 140, plus précisément contre l'extrémité avant de l'enveloppe cylindrique 146 du clapet 140. Alors que le mouvement d'insertion se poursuit, l'élément mâle 10 repousse axialement le clapet 140 de sa position distale vers sa position proximale, si bien que la connexion fluidique est établie entre le conduit V10 de l'élément mâle 10 et le conduit V100 de l'élément femelle 100. Le raccord rapide R est alors dans la configuration de la figure 4.

Alors que le mouvement d'insertion se poursuit, les billes 132 sont en appui contre la deuxième surface 34 de la collerette 24 de l'élément mâle 10 et se déplacent vers la deuxième portion cylindrique 26, jusqu'à venir en contact de la deuxième portion cylindrique 26, entre la deuxième surface 34 et la troisième surface 36 de l'élément mâle 10. Les billes sont alors engagées dans la gorge 40. Au cours de ce mouvement, la bague de manœuvre 160 revient vers sa position avancée. Ce fonctionnement constitue un raccord rapide R automatique à l'accouplement, pour lequel aucune autre action de manœuvre n'est nécessaire que l'insertion manuelle de l'élément mâle 10 dans le canal d'insertion V106 de l'élément femelle 100.

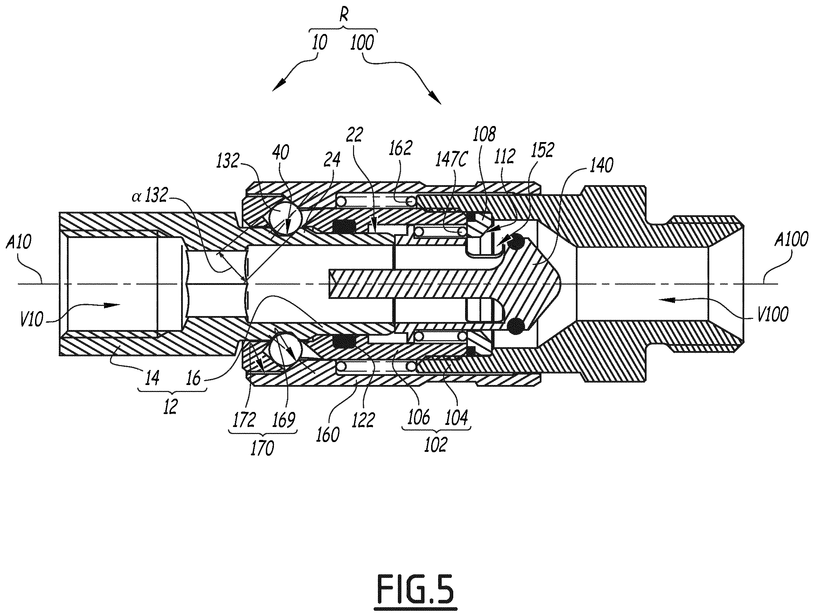

Le raccord rapide R est alors dans la configuration accouplée, comme représenté sur la figure 5. Le conduit V10 de l'élément mâle 10 et le conduit V100 de l'élément femelle 100 sont en communication fluidique l'un avec l'autre, l'étanchéité entre l'élément mâle 10 et l'élément femelle 100 étant maintenue grâce au joint annulaire 122. Les billes 132 sont alors dans leur position distale et sont maintenues dans cette position distale par les deuxième et troisièmes surfaces 34 et 36, qui sont agencées en regard l'une de l'autre et qui sont ici inclinées à ±45°. La gorge 40 présente ici un profil trapézoïdal.

On comprend que lorsque le raccord rapide R est en configuration accouplée et qu'un fluide sous pression circule dans les conduits V10 et V100 des éléments mâle 10 et femelle 100 accouplés, la pression de ce fluide tend à éloigner l'élément mâle 10 de l'élément femelle 100, les billes 132 étant alors en appui contre une paroi du logement 130, ici incliné à 50° vers l'arrière de l'élément femelle 100, et contre la deuxième surface 34 de l'élément mâle 10, ici inclinée à 45° vers l'arrière de l'élément mâle 10. Ainsi, comme représenté en coupe sur la figure 7, chaque bille 132 se retrouve en appui entre deux surfaces qui ne sont pas parallèles, mais qui forment entre elles un angle dit « de pincement » α132, qui est non nul, de sorte que cette bille 132 est repoussée vers sa position distale, autrement dit vers la gorge 40 de l'élément mâle 10. L'angle de pincement α132 est ici égal à 5°. Les billes 132, maintenues dans la gorge 40 de l'élément mâle 10, limitent les mouvements axiaux de l'élément mâle 10 parallèlement à l'axe central A100. La gorge 40 est ainsi une gorge de verrouillage.

De préférence, lorsque le raccord rapide R est en configuration accouplée, la bague de manœuvre 160 est en butée avant contre le corps femelle 102, de sorte qu'un jeu dimensionnel est ménagé entre chaque bille 132 et le poussoir 170 en regard, en particulier entre chaque bille et la paroi 169 du poussoir 170.

En variante non représentée, lorsque le raccord rapide R est en configuration accouplée, le poussoir 170 est en appui contre les billes 132, autrement dit la bague de verrouillage 160 exerce un effort centripète sur les billes 132 de verrouillage.

On décrit à présent une séquence de désaccouplement du raccord rapide R, en référence aux figures 5 à 7.

Alors que le raccord rapide R est dans la configuration accouplée, comme représenté sur la figure 5, initialement l'opérateur rapproche légèrement l'élément femelle 100 de l'élément mâle 10, de manière à décharger les billes 132 de l'action d'appui de la collerette 24 de l'élément mâle 10, cette action d'appui étant due à l'angle de pincement entre chaque logement 130 et la deuxième surface 34 de la collerette 24. Ce mouvement initial n'est possible que si le fluide circulant dans le raccord rapide R n'est pas sous pression, ce qui empêche un opérateur de désaccoupler le rapport rapide R sous pression et ajoute ainsi une sécurité lors de l'utilisation du raccord R.

Dans l'exemple illustré, l'élément femelle 100 est rapproché de l'élément mâle 10 jusqu'à ce que le corps avant 106 de l'élément femelle 100 vienne en butée contre l'épaulement 44 du corps mâle 10. L'opérateur déplace ensuite la bague de manœuvre 160 selon un mouvement de recul, c'est-à-dire de la position avancée vers la position reculée, à l'encontre de l'effort du ressort de verrouillage 162. Les billes 132, qui sont ici magnétiques, sont attirées magnétiquement par la bague de manœuvre 160, réalisée ici en acier inoxydable, et restent au contact de la paroi 169 du poussoir 170. Le corps mâle 12 et le corps avant 106 étant fabriqués dans des matériaux amagnétiques, ici en laiton, de sorte que le corps mâle 12 et le corps avant 106 ne perturbent pas la force d'attraction entre les billes 132 et le poussoir 170.

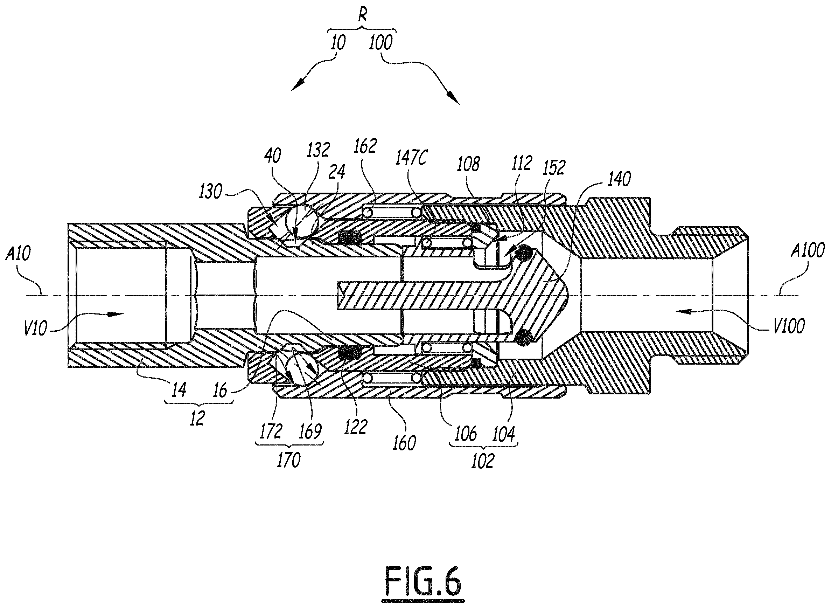

Les billes 132 sont ainsi déplacées, chacune dans son logement 130 respectif, de la position distale vers la position proximale. Alors que le mouvement de recul de la bague de manœuvre 160 continue, les billes 132, toujours en contact de la paroi 169 du poussoir 170, arrivent aussi en contact avec la paroi radiale 172 du poussoir 170. Le raccord rapide R est alors dans une configuration intermédiaire de déverrouillage, comme représenté sur la figure 6. La bague de manœuvre 160 est dans une position intermédiaire de déverrouillage.

Les billes 132 sont alors dans la position proximale, dans laquelle les billes 132 sont dégagées de la gorge 40 de verrouillage de l'élément mâle 10, et n'empêchent plus les mouvements axiaux de l'élément mâle 10 par rapport à l'élément femelle 100.

Le mouvement de recul de la bague de manœuvre 160 se poursuit jusqu'à ce que la bague de manœuvre 160 atteigne sa position arrière, comme représenté sur la figure 7, où le raccord rapide R est dans une configuration déverrouillée. Le mouvement de recul de la bague de manœuvre 160 entre la position intermédiaire de déverrouillage et la position arrière correspond à un mouvement de surcourse, dit aussi simplement surcourse, de la bague de manœuvre 160.

Au cours du mouvement de surcourse de la bague de manœuvre 160, les billes 132 restent en contact de la paroi radiale 172 du poussoir 170. L'attraction magnétique est ainsi maintenue entre les billes 132 et la paroi radiale 172. Les billes 132 sont ainsi maintenues dans la position proximale.

On comprend que tant que la bague de manœuvre 160 est maintenue dans la position intermédiaire de déverrouillage, ou bien dans la position arrière, ou bien dans toute autre position intermédiaire entre ces deux positions, l'utilisateur peut éloigner l'élément mâle 10 de l'élément femelle 100 selon un mouvement de découplage, opposé au mouvement d'insertion.

Au cours de ce mouvement de découplage, le clapet 140 reprend progressivement sa position distale, obturant le conduit V100 de l'élément femelle 100. Le clapet 140 contribue, grâce au ressort de rappel 147C, à expulser l'élément mâle 10 à la déconnexion, ce qui évite le retour des billes 132 en position distale et prévient les difficultés de désaccouplement.

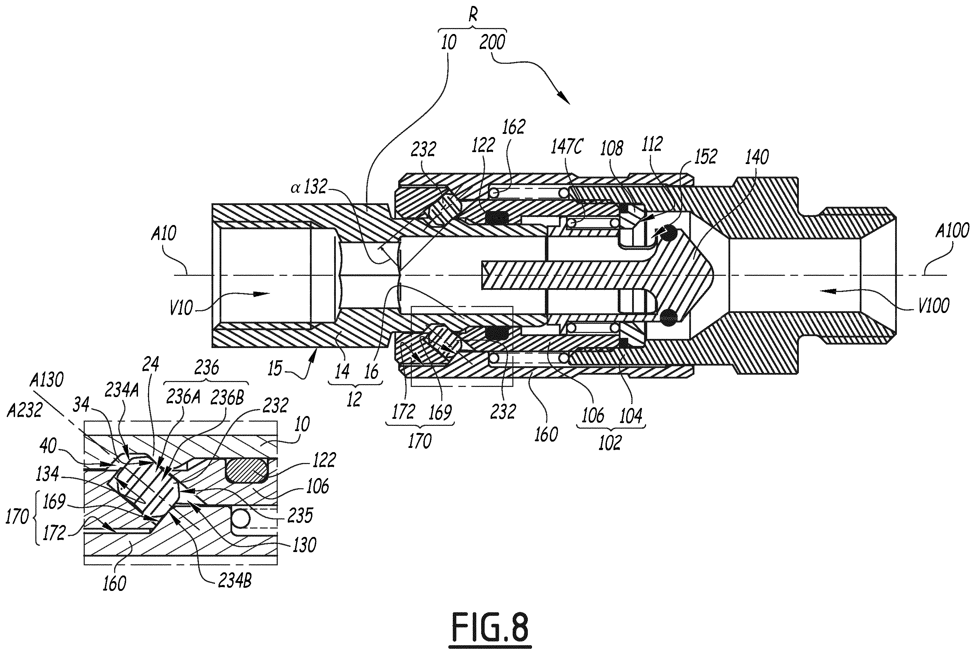

On décrit à présent, en référence aux figures 8 à 14, des raccords rapides R conformes à des deuxième, troisième et quatrième modes de réalisation de l'invention. Pour chaque mode de réalisation nouvellement décrit, les éléments analogues à ceux du ou des modes de réalisation précédents portent les mêmes références et fonctionnent de la même façon. Dans ce qui suit, on décrit principalement les différences entre chaque mode de réalisation et le ou les précédents.

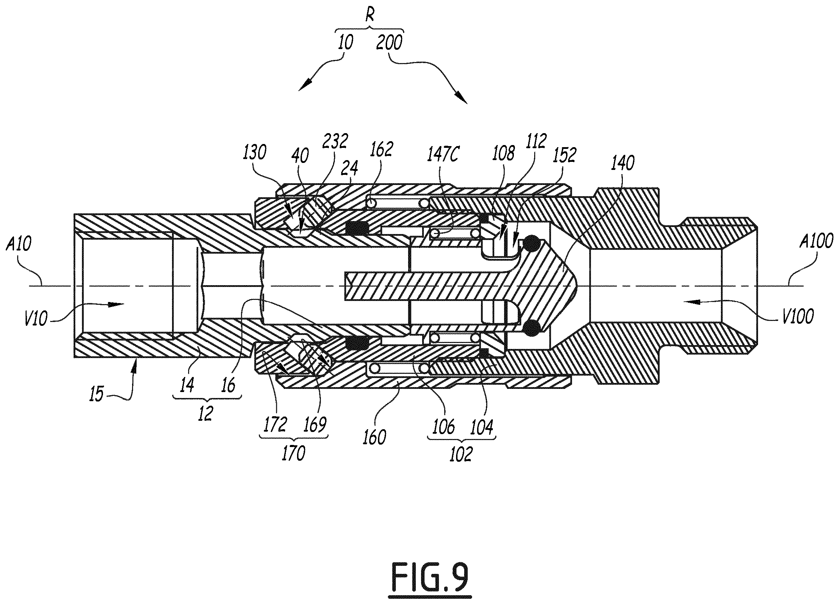

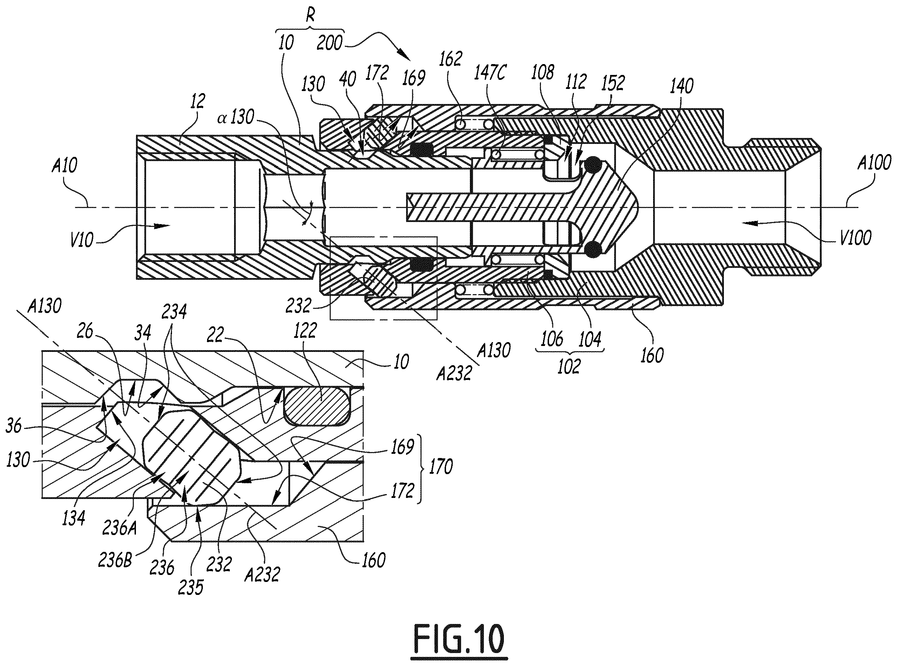

En référence aux figures 8 à 10, le raccord rapide R conforme au deuxième mode de réalisation de l'invention comprend l'élément mâle 10 et un élément femelle 200. Sur la figure 8, le raccord rapide R est représenté dans la configuration accouplée, tandis que sur la figure 9, le raccord rapide R est représenté dans la configuration intermédiaire de déverrouillage, et que sur la figure 10, le raccord rapide R est représenté dans la configuration déverrouillée.

Une des principales différences du deuxième mode de réalisation avec le premier mode de réalisation est que l'élément femelle 200 comprend des éléments de verrouillage qui sont des pions 232, au lieu des billes 132 dans le premier mode de réalisation. Les pions 232 sont réalisés en un matériau magnétique, tandis que la bague de manœuvre 160 est réalisée en un matériau ferromagnétique, ici en acier inoxydable.

Chaque pion 232 présente ici une forme de révolution autour d'un axe de révolution A232, qui est confondu avec l'axe de guidage A130 lorsque ce pion 232 est reçu dans le logement 130 correspondant. Les pions 232 sont de préférence identiques les uns aux autres. La forme des pions 232 n'est pas limitative. En variante non représentée, les organes de verrouillage sont des doigts de verrouillage.

Chaque pion 232 présente globalement une forme de cylindrique de section circulaire et centré sur l'axe de révolution A232. Chaque pion 232 comprend deux extrémités 234, qui s'étendent ici orthogonalement à l'axe de révolution A232. On appelle extrémité inférieure 234A celle des deux extrémités 234 qui est la plus proche de l'axe central A100, et extrémité supérieure 234B l'autre des deux extrémités 234. L'extrémité supérieure 234B est donc située du côté du poussoir 170.

Pour chaque logement 130, l'axe de guidage 130 est orthogonal à la paroi 169 du poussoir 170, de sorte que lorsque le pion 232 est reçu dans ce logement 130, l'axe de révolution 232 est orthogonal à la paroi 169 du poussoir 170, de manière à favoriser le contact entre chaque pion 232 et la paroi 169 du poussoir 170, maximisant ainsi la force d'attraction entre chaque pion 232 et le poussoir 170.

Les extrémités 234 sont chanfreinées, formant des parois chanfreinées 235, qui sont ici des surfaces tronconiques centrées sur l'axe de révolution A232. Les parois chanfreinées sont agencées de sorte qu'une ligne génératrice de la paroi chanfreinée 235 prend contact avec la bague de manœuvre 160 en position proximale, comme représenté sur les figures 9 et 10. Autrement dit, lorsque le pion 232 est en position proximale, le pion 232 est en contact linéique contre la bague 160. Plus précisément, la paroi chanfreinée 235 de chaque pion 232 est en contact linéique contre la paroi radiale 172 du poussoir 170, ici fabriqué d'une seule pièce avec la bague de manœuvre 160.

Par comparaison, dans le premier mode de réalisation, chaque bille 132 est en contact ponctuel avec les surfaces de l'élément mâle 10 ou de la bague de manœuvre 160 - et donc aussi avec les surfaces du poussoir 170 -. Lorsque les pions 232 sont en contact linéique avec le poussoir 170, la force d'attraction entre chaque pion 232 et le poussoir 170 est supérieure à la force d'attraction entre les billes 131 et le poussoir 170.

Chaque pion 232 comprend aussi une rainure en V 236 circonférentielle, qui est ménagée en creux et qui présence un profil en forme de V évasé. La rainure en V 236 est ménagée à mi-distance entre les deux extrémités 234 du pion 232, les deux branches du V formant deux surfaces tronconiques, incluant une première surface tronconique 236A et une deuxième surface tronconique 236B. Lorsque le pion 232 est reçu dans le logement 130 correspondant, la première surface tronconique 236A est globalement plus proche de l'axe central A100 que la deuxième surface tronconique 236B. Avantageusement, l'élément femelle 100 du raccord rapide R convient à l'accouplement d'un élément mâle 10 à collerette 24 de faible hauteur au regard de la portion avant 16.

Lorsque le raccord rapide R est en configuration accouplée, la première surface tronconique 236A est configurée pour être en appui linéique sur la deuxième surface 36 de la collerette 24 de l'élément mâle 10, ce qui permet une meilleure retenue de l'élément mâle 10. Autrement dit, comme illustré dans le plan de coupe des figures 8 et 9, la première surface tronconique 236A est apte à coopérer de façon parallèle au bord distal de la gorge 40, le bord distal étant ici la deuxième surface 34 de la collerette 24. Dans l'exemple illustré, la rainure en V 236 présente un angle d'ouverture de 170°. Chacune des première surface tronconique 236A et deuxième surface tronconique 236B est donc inclinée d'un angle de 5° par rapport à l'axe de révolution A232.

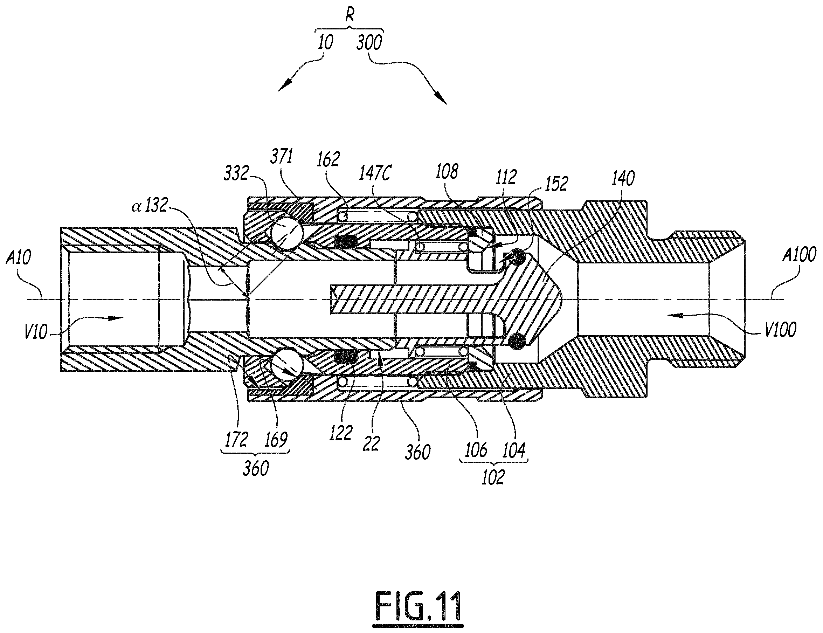

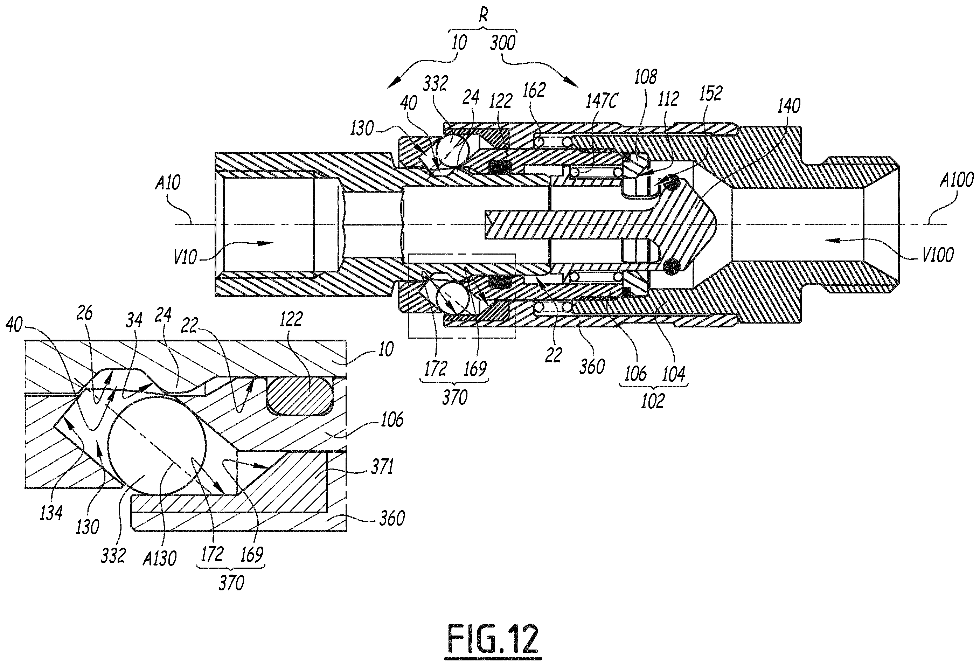

En référence aux figures 11 et 12, le raccord rapide R conforme au troisième mode de réalisation de l'invention comprend l'élément mâle 10 et un élément femelle 300. Sur la figure 11, le raccord rapide R est représenté dans la configuration accouplée, tandis que sur la figure 12, le raccord rapide R est représenté dans la configuration déverrouillée.

Alors que dans les modes de réalisation précédents, le poussoir 170 est venu de matière avec la bague de manœuvre 160, dans le troisième mode de réalisation, l'élément femelle 300 comprend une bague de manœuvre 360 avec un poussoir 370 rapporté au reste de la bague de manœuvre.

Le poussoir 370 est ici formé par un insert 371, qui est fabriqué séparément du reste de la bague de manœuvre 360 et qui est ensuite solidarisé au reste de la bague de manœuvre 360. L'insert 371 est ici rapporté dans un lamage avant 361 de la bague de manœuvre 360, par exemple monté en force ou par frettage. Comme dans les modes précédents, une fois solidarisé à la bague de manœuvre 360, le poussoir 370 définit une paroi interne, orientée vers l'axe central A100, cette paroi interne incluant la paroi 169 inclinée et la paroi radiale 172, formant des surfaces de contact pour les billes 132. La paroi 169 du poussoir 370 présente une forme tronconique et est ici inclinée à 45° et orientée vers l'avant de l'élément femelle 100. Comme précédemment, la paroi radiale 172 est parallèle à l'axe central A100.

Dans l'exemple illustré, le poussoir 370 rapporté est réalisé en un matériau magnétique, tandis que l'élément femelle 300 comprend des billes 332, formant des organes de verrouillage, qui sont réalisées en matériau ferromagnétique, de sorte que chaque organe de verrouillage - ici les billes 332 - et le poussoir 370 sont configurés pour être attirés magnétiquement l'un vers l'autre.

Avantageusement, le reste de la bague de manœuvre 360, c'est-à-dire n'incluant pas l'insert 371 magnétique, est réalisé en un matériau amagnétique, par exemple en laiton, ce qui est facile et économique.

Selon une variante miroir non représentée, les billes 332 sont magnétiques, tandis que le poussoir 370, formé par l'insert 371 solidarisé au reste de la bague de manœuvre 360, est réalisé en un matériau ferromagnétique. Cette variante est analogue au premier mode de réalisation.

Selon une autre variante non représentée, les billes 332 sont remplacées par des pions, analogues aux pions 232 du deuxième mode de réalisation. Selon une autre variante encore, lorsque à la fois le poussoir 370 et les organes de verrouillage - billes ou pions - sont magnétiques, les pôles magnétiques nord / sud sont agencés de sorte que chaque organe de verrouillage est magnétiquement attiré vers le poussoir.

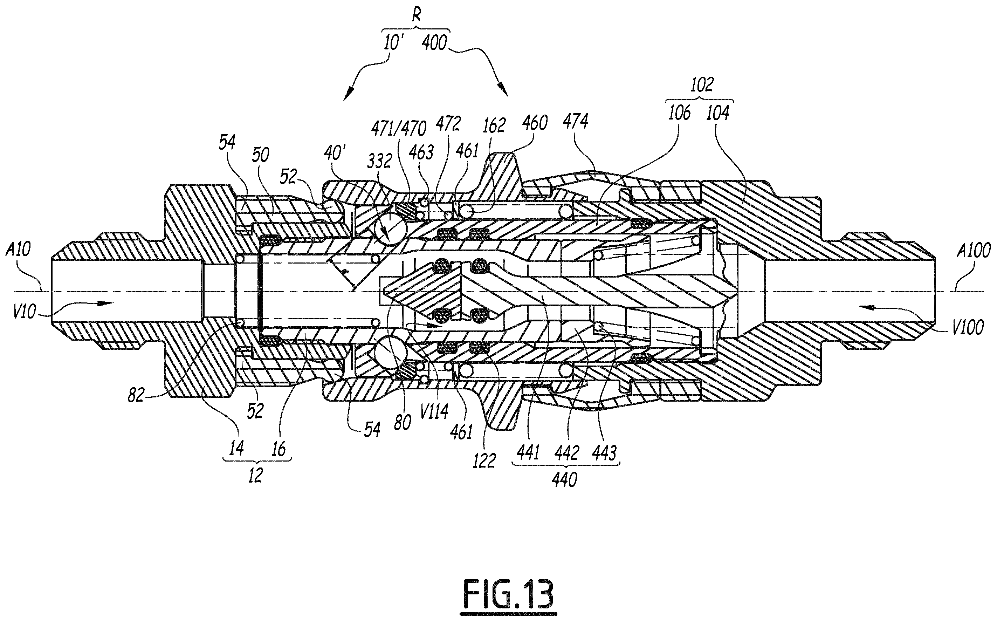

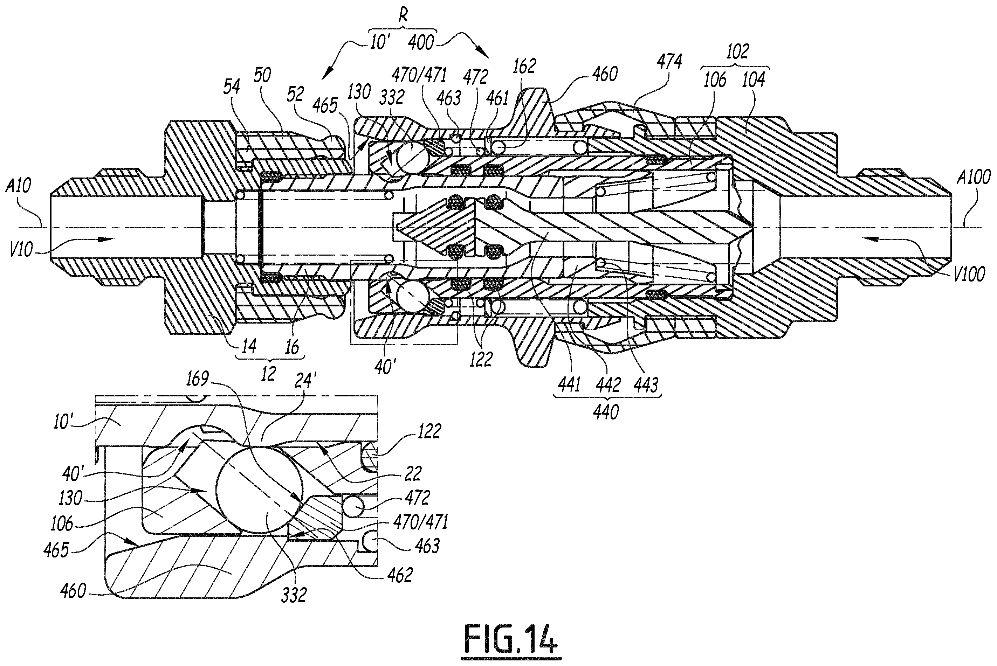

En référence aux figures 13 et 14, le raccord rapide R conforme au quatrième mode de réalisation de l'invention comprend un élément mâle 10' et un élément femelle 400. Sur la figure 13, le raccord rapide R est représenté dans la configuration accouplée, tandis que sur la figure 14, le raccord rapide R est représenté dans la configuration déverrouillée.

Une des principales différences du quatrième mode de réalisation avec les modes de réalisation précédents est que dans le quatrième mode de réalisation, l'élément femelle 400 comprend une bague de manœuvre 460 et un poussoir 470 qui ne sont pas solidaires l'un de l'autre.

Le poussoir 470 est ici formé par une bague de rappel 471, qui est interposée, radialement à l'axe central A100, entre la bague de manœuvre 460 et le corps femelle 102. Comme dans le troisième mode de réalisation, le poussoir 470 est ici réalisé en un matériau magnétique, tandis que les billes 332 sont réalisées en un matériau ferromagnétique.

Le poussoir 470 présente une forme de révolution autour de l'axe central A100. Le poussoir 470 est mobile axialement le long de l'axe central A100. Le poussoir 470 ménage la paroi 169 inclinée, qui est configurée pour repousser les billes 332 en position distale lorsque le poussoir 470 est en position avant, et qui est apte à entrainer magnétiquement chaque bille 332 vers sa position proximale lorsque le poussoir 470 est déplacé vers sa position arrière.

La bague de manœuvre 460 comprend une rondelle 461, contre laquelle prend appui le ressort de verrouillage 162, repoussant la bague de manœuvre 460 vers sa position avancée. Dans l'exemple illustré, l'élément femelle 400 comprend aussi un organe de rappel additionnel, ici un ressort de poussoir 472, qui est intercalé axialement entre la rondelle 461 et le poussoir 470, de manière à repousser le poussoir 470 vers sa position avant. Autrement dit le ressort de poussoir 472 constitue un organe de rappel de la bague de rappel 471 vers la position avant.

En variante non représentée, le ressort de poussoir 472 prend appui sur le corps arrière 104 et constitue un organe de rappel de la bague de manœuvre 460 vers la position avancée.

Du côté avant, les mouvements relatifs du poussoir 470 par rapport à la bague de manœuvre 460 sont limités par une butée axiale formée par un épaulement 462, ménagé dans une surface interne de la bague de manœuvre 460.

Du côté arrière, les mouvements relatifs du poussoir 470 par rapport à la bague de manœuvre 460 sont limités par une butée formée par un jonc 463, qui est ici reçu dans une rainure ménagée dans la surface interne de la bague de manœuvre 460.

Malgré la complexité relative de l'élément femelle 400 du quatrième mode de réalisation par rapport aux autres modes de réalisation, la bague de rappel 471 est démontable et peut ainsi être remplacée, lors d'une maintenance de l'élément femelle 400, par exemple si la bague de rappel 471 est endommagée ou si sa rémanence magnétique passe en deçà d'un niveau prédéterminé.

En variante non représentée, le ressort de poussoir 472 est omis, le poussoir 470 étant repoussé vers l'avant par le jonc 463 de la bague de manœuvre 460.

Dans le quatrième mode de réalisation, l'élément mâle 10' comprend une gorge 40' qui, à la différence de la gorge 40 de verrouillage à profil trapézoïdal des modes de réalisation précédents, présente ici un profil arrondi. Le profil des gorges 40 ou 40' n'est pas limitatif. De manière analogue, l'élément mâle 10' comprend ici une collerette 24' de verrouillage à profil arrondi. Les profils des collerettes 24 ou 24' de l'élément mâle 10 ou 10' ne sont pas limitatifs.

Dans le quatrième mode de réalisation, la partie arrière 14 et la portion avant 16 du corps mâle 12 sont deux pièces distinctes, qui sont assemblées l'une à l'autre de manière étanche, ici par vissage.

L'élément mâle 10' comprend ici un clapet 80 d'obturation, qui est reçu dans le conduit V10 de l'élément mâle 10 et qui est mobile axialement, le long de l'axe principal A10, entre une position avant, dans laquelle le clapet 80 obture le conduit V10 de manière étanche, et une position arrière, dans laquelle le clapet 80 n'obture pas le conduit V10. Le clapet 80 est ici repoussé vers sa position avant au moyen d'un ressort de fermeture 82, qui est reçu dans le conduit V10 de l'élément mâle 10 et qui prend appui contre le corps mâle 10.

L'élément femelle 400 comprend ici deux joints annulaires 122, qui sont disposés dans l'enceinte avant V114 et qui sont configurés pour assurer l'étanchéité avec l'élément mâle 10' lorsque l'élément mâle 10' est inséré dans l'enceinte avant V114.

L'élément femelle 400 comprend un clapet 440, lequel comprend un piston central 441, qui est fixe par rapport au corps femelle 102, et un tiroir 442, qui est agencée autour du piston central 441. Le tiroir 442 est mobile axialement le long de l'axe central A100, entre une position d'obturation, dans laquelle le tiroir 442 coopère avec le piston central 441 de manière à obturer le canal d'insertion V106 de l'élément femelle 100, et une position d'ouverture, dans laquelle le canal d'insertion V106 n'est pas obturé, comme représenté sur les figures 13 et 14. Le tiroir 442 est repoussé vers sa position d'obturation par un ressort d'obturation 443, qui prend ici appui contre le corps femelle 102.

L'élément mâle 10' comprend avantageusement un capot 50, qui est configuré pour prendre appui sur une paroi annulaire 465 de la bague de manœuvre 460, en configuration accouplée du raccord rapide R. Le capot 50 sert à limiter les pollutions internes. Dans l'exemple illustré, le capot 50 est réalisé en un matériau déformable élastiquement, de préférence en élastomère. Le capot 50 forme un manchon qui s'étend, depuis la partie arrière 16 de l'élément mâle 10' vers l'avant de l'élément mâle 10'. Le capot 50 présente une extrémité arrière 54, qui est ici fixée dans une gorge de la partie arrière 14, et une extrémité avant 52, qui est opposée à l'extrémité arrière 54 et qui est configurée pour venir en appui contre une extrémité avant de la bague de manœuvre 460, en particulier contre la paroi annulaire 465 de la bague de manœuvre 460.

La paroi annulaire 465 de la bague de manœuvre 460 présente ici une forme tronconique centrée sur l'axe central A100. Lorsque la bague de manœuvre 460 est en position avancée, la paroi annulaire 465 s'étend, vers l'avant de l'élément femelle 400, au-delà du corps avant 106, de sorte que lorsque le raccord rapide R est en configuration verrouillée, le capot 50 est en appui contre la paroi annulaire 465, empêchant l'intrusion de corps étrangers, par exemple des poussières, dans le mécanisme du raccord rapide R.

Ainsi, dans le quatrième mode de réalisation, grâce au ressort de poussoir 472 intercalé axialement entre la rondelle 461 et la bague de rappel 471, la position de la bague de rappel 471 reste indépendante de la position de la bague de manœuvre 460 pour garantir une position avancée du poussoir 470. Il est ainsi possible de garantir que les billes 332 sont maintenues dans la position distale, tout en réduisant l'amplitude du déplacement, vers l'avant, de la bague de manœuvre 460, laquelle assure l'étanchéité du raccord R par coopération avec le capot 50.

L'élément femelle 400 comprend aussi un manchon élastique 474, qui est disposé axialement entre le corps femelle 102 et la bague de manœuvre 460. Dans l'exemple illustré, le manchon élastique 474 s'étend de manière continue depuis le corps arrière 104 jusqu'à la bague de manœuvre 460, le manchon élastique 474 se déformant élastiquement lorsque la bague de manœuvre 460 est déplacée entre les positions avancée et reculée. Le manchon élastique 474 empêche l'intrusion de corps étrangers, poussières ou liquides, entre la bague de manœuvre 460 et le corps arrière 104 du corps femelle 102. Autrement dit, le manchon élastique 474 assure l'étanchéité d'un espace annulaire entre le corps femelle 102 et la bague de manœuvre 460.

Quel que soit le mode de réalisation de l'invention, on comprend que chaque organe de verrouillage - bille ou pion - et le poussoir sont configurés pour être attirés magnétiquement l'un vers l'autre, de sorte que le poussoir est apte à entrainer magnétiquement chaque organe de verrouillage vers sa position proximale lorsque le poussoir est déplacé vers sa position arrière.

Ainsi, au moins l'un des éléments parmi la paroi du poussoir et les organes de verrouillage est réalisé dans un matériau qui emmagasine une énergie magnétique, tandis que l'autre élément parmi les organes de verrouillage et la paroi du poussoir présente une capacité à conduire le flux magnétique/possède une perméabilité magnétique.

En variante non représentée, les deux éléments parmi la paroi du poussoir et les organes de verrouillage ont une capacité d'aimantation ou emmagasine une énergie magnétique. Dans ce cas, les pôles magnétiques nord / sud de la paroi du poussoir et des organes de verrouillage sont disposés de manière que chaque organe de verrouillage et le poussoir sont attirés magnétiquement l'un vers l'autre.

De manière générale, les matériaux à perméabilité magnétique qui réagissent à l'aimant sont à base des éléments de Fe Ni Cobalt Gadolinium. L'Inox martensitique ou ferritique est magnétique, ce qui n'est pas le cas pour tous les inox.

Les matériaux amagnétiques qui ne réagissent pas ont une faible perméabilité, par exemple inox austénitique, cuivre, aluminium. On peut les qualifier également de matériau paramagnétique quand ils ne présentent qu'une faible attraction par un aimant. En variante, le corps mâle 12 et le corps avant 116 pourraient être réalisés en matériau paramagnétique.

Également, il existe des poudres magnétisées de ferrite qui peuvent être utilisées comme couche de revêtement de la paroi de poussoir et qui ont une capacité d'aimantation d'une bille ferromagnétique. Les poudres magnétisées sont par exemple intégrées dans un liant et sont appliquées comme une peinture magnétique.

Dans les troisième et quatrième modes de réalisation, l'insert 371 ou la bague de de rappel 471 sont avantageusement entièrement réalisés en un matériau magnétique. L'utilisation d'un unique matériau facilite la réalisation d'un poussoir magnétique. Autrement dit, le poussoir 370 ou 470 présente une paroi magnétique annulaire.

En variante non représentée, la paroi magnétique du poussoir n'est pas annulaire mais seules des portions en regard des logements 130 sont magnétiques, de sorte que le poussoir est indexé angulairement autour de l'axe central A100 pour la correspondance des portions magnétiques avec les logements.

Selon une autre variante non représentée, lorsque le matériau du poussoir est rendu magnétique par un traitement de surface, par exemple avec un revêtement de surface magnétique tel qu'une peinture, seules des portions de la surface annulaire du poussoir sont traitées.

Dans les premiers et deuxièmes modes de réalisation, chacun des organes de verrouillage, bille 132 ou pion 232, est magnétique, cette configuration étant préférée. En variante non représentée, seulement une partie des organes de verrouillage, voire un seul des organes de verrouillage, est magnétique.

En variante non représentée, les axes de logement A130 de deux logements respectifs 130 ne sont pas inclinés du même angle par rapport à l'axe central A100.

Dans les modes de réalisation illustrés, lorsque les organes de verrouillage, bille 132 ou pion 232, sont dans la position distale, les organes de verrouillage dépassent suffisamment dans le canal d'insertion V106 de sorte que les organes de verrouillage 132/232 prennent contact avec la portion cylindrique 22 de l'élément mâle 10 reçu dans l'espace proximal V116, comme illustré à la figure 2, en particulier avec le chanfrein 21.

En variante non représentée, les organes de verrouillage en position distale dépassent dans le canal d'insertion V106 moins que dans les modes de réalisation illustrés, de sorte que l'élément femelle ne soit plus configuré pour que les organes de verrouillage prennent contact avec la portion cylindrique 22 (ni chanfrein 21) de l'élément mâle 10 reçu dans l'espace proximal V116, mais uniquement avec la collerette 24. Cette configuration est avantageuse, car on évite ainsi que les organes de verrouillage ne prennent contact de façon répétée avec la portion cylindrique 22 de l'élément mâle 10, ce qui permet de limiter les marquages ou dégradation de cette portion cylindrique 22, qui est fonctionnelle pour l'étanchéité du raccord avec le joint annulaire 122 en configuration accouplée. Par extension, on réduit également les risques de dégradation du joint annulaire 122. On réduit ainsi les risques de fuite du raccord R en configuration accouplée.

## Revendications

1. Élément femelle (100 ; 200 ; 300 ; 400) de raccord rapide (R) destiné à la jonction amovible de canalisations de fluide sous pression, ledit élément femelle étant apte à être accouplé avec un élément mâle (10 ; 10') complémentaire, l'élément femelle comprenant :
- un corps femelle (102) creux définissant un canal d'insertion (V106), le canal d'insertion définissant un axe central (A100) du corps femelle et débouchant du corps femelle par une embouchure (118), l'embouchure définissant un côté avant de l'élément femelle,
- au moins un organe de verrouillage (132 ; 232 ; 332), qui est reçu dans un logement (130) respectif ménagé dans l'épaisseur du corps femelle, chaque logement débouchant dans le canal d'insertion, chaque logement étant incliné par rapport à l'axe central du corps femelle de sorte que chaque organe de verrouillage est mobile dans son logement entre une position distale, désignant une position située du côté avant de l'élément femelle, dans laquelle l'organe de verrouillage dépasse dans le canal d'insertion (V106), et une position proximale, désignant une position située du côté arrière de l'élément femelle, dans laquelle l'organe de verrouillage ne dépasse pas dans le canal d'insertion ;
- un poussoir (170 ; 370 ; 470) :
• qui comprend une paroi (169) orientée vers chaque logement (130), et
• qui est mobile entre une position avant, dans laquelle la paroi du poussoir maintient chaque organe de verrouillage dans sa position distale, et une position arrière, dans laquelle chaque organe de verrouillage est dans sa position proximale,
- une bague de manœuvre (160 ; 360 ; 460), qui entoure le corps femelle (102) et qui est mobile par rapport au corps femelle le long de l'axe central (A100) entre une position avancée et une position reculée, la bague de manœuvre étant configurée pour entrainer le poussoir (170 ; 370 ; 470) de la position avant vers la position arrière lorsque la bague de manœuvre est déplacée de la position avancée vers la position reculée, et
- un premier organe de rappel (162), configuré pour rappeler la bague de manœuvre vers la position avancée,
dans lequel :
- chaque organe de verrouillage (132 ; 232 ; 332) et le poussoir (170 ; 370 ; 470) sont configurés pour être attirés magnétiquement l'un vers l'autre, et
- le poussoir est apte à entrainer magnétiquement chaque organe de verrouillage vers sa position proximale lorsque le poussoir est déplacé vers sa position arrière.

2. Elément femelle (100 ; 200 ; 300) selon la revendication 1, **caractérisé en ce que** le poussoir (170 ; 370) est solidaire de la bague de manœuvre (160 ; 360).

3. Elément femelle (400) selon la revendication 1, **caractérisé en ce que** le poussoir (470) est une bague de rappel (471), qui est centrée sur l'axe central (A100) de l'élément femelle, qui est mobile en translation par rapport à la bague de manœuvre (460), et qui est interposée radialement entre la bague de manœuvre et le corps femelle (102).

4. Elément femelle (400) selon la revendication 3, **caractérisé en ce que** :
- la bague de manœuvre (460) comprend une butée axiale (462), et
- l'élément femelle comprend un deuxième organe de rappel (472), qui est configuré pour repousser la bague de rappel (471) dans sa position avancée contre la butée axiale (462).

5. Elément femelle (100 ; 300 ; 400) selon l'une quelconque des revendications 1 à 4, **caractérisé en ce que** l'organe de verrouillage (132 ; 332) est une bille.

6. Elément femelle (200) selon l'une quelconque des revendications 1 à 4, **caractérisé en ce que** l'organe de verrouillage (232) est un pion, qui s'étend selon un axe de guidage (A130) du logement (130).

7. Elément femelle (100 ; 200 ; 300 ; 400) selon l'une quelconque des revendications 1 à 6, **caractérisé en ce qu'**au moins un élément parmi, d'une part, chaque organe de verrouillage (132 ; 232 ; 332) et, d'autre part, le poussoir (170 ; 370 ; 470), est magnétique et est apte à attirer magnétiquement respectivement le poussoir ou chaque organe de verrouillage.

8. Elément femelle (300) selon la revendication 7, **caractérisé en ce que** chaque organe de verrouillage (332) et le poussoir (370) sont réalisés dans un matériau ferromagnétique ou sont revêtus d'une couche de matériau ferromagnétique.

9. Elément femelle (300) selon l'une quelconque des revendications 1 à 8, **caractérisé en ce que** le poussoir (370) ou chaque organe de verrouillage comprend un insert ferromagnétique (371) orienté vers respectivement chaque organe de verrouillage (332) ou le poussoir (370).

10. Elément femelle (100 ; 200 ; 300 ; 400) selon l'une quelconque des revendications 1 à 9, **caractérisé en ce que**
- le corps femelle (102) comprend un corps avant (106), dans lequel est ménagé chaque logement (130),
- le corps avant (106) est réalisé dans un matériau amagnétique.

11. Elément femelle (400) selon l'une quelconque des revendications 1 à 10, **caractérisé en ce que** l'élément femelle comprend un manchon élastique (474), qui est disposé axialement et s'étend de manière continue entre le corps (102) et la bague de manœuvre (460) et qui se déforme élastiquement lorsque la bague de manœuvre est déplacée entre les positions avancée et reculée.

12. Elément femelle (100 ; 200 ; 300 ; 400) selon l'une quelconque des revendications 1 à 11, **caractérisé en ce que** la paroi (169) du poussoir (170 ; 370 ; 470) s'étend selon un cône de révolution centré sur l'axe central (A100), le cône étant ouvert vers l'avant et présentant, par rapport à l'axe central, un angle au sommet de préférence égal à 40°.

13. Elément femelle (100 ; 200 ; 300 ; 400) selon l'une quelconque des revendications 1 à 12, **caractérisé en ce que** l'élément femelle comprend un clapet (140 ; 440) d'obturation du canal d'insertion (V106), le clapet étant mobile le long de l'axe central (A100) de l'élément femelle.

14. Elément femelle (100 ; 200 ; 300) selon l'une quelconque des revendications 1 à 13, **caractérisé en ce que** le poussoir (170 ; 370) comprend une paroi radiale (172), qui est configurée pour attirer magnétiquement l'organe de verrouillage (132 ; 232 ; 332) et qui s'étend parallèlement à l'axe central (A100) selon une longueur supérieure ou égale à une course de la bague de manœuvre (160 ; 360) entre sa position avancée et sa position reculée, moins une valeur de déplacement axial de l'organe de verrouillage entre sa position distale et sa position proximale.

15. Elément femelle (100 ; 200 ; 300 ; 400) selon l'une quelconque des revendications 1 à 14, **caractérisé en ce que** l'organe de rappel (162) de la bague de manœuvre (160 ; 360 ; 460) comprend un ressort, qui est interposé radialement entre le corps femelle (102) et la bague de manœuvre (160 ; 360 ; 460).

16. Raccord rapide (R) conçu pour la jonction de canalisations de fluide sous pression, le raccord rapide comprenant :
- un élément femelle (100 ; 200 ; 300 ; 400) selon l'une quelconque des revendications 1 à 15, et
- un élément mâle (10 ; 10') complémentaire de l'élément femelle, l'élément mâle étant configuré pour être accouplé avec l'élément femelle dans une configuration accouplée du raccord,
dans lequel :
- l'élément mâle (10 ; 10') comprend un corps mâle (12), qui est apte à être reçu dans le canal d'insertion (V106) du corps femelle et qui s'étend selon un axe principal (A10), l'axe principal de l'élément mâle et l'axe central de l'élément femelle étant coaxiaux lorsque le corps mâle est reçu dans le canal d'insertion de l'élément femelle,
- le corps mâle comprend une première surface (30), qui est apte à repousser les organes de verrouillage (132 ; 232 ; 332) dans leur position proximale lorsque le corps mâle est inséré dans le canal d'insertion, et
- la première surface est inclinée, par rapport à l'axe principal (A10), d'un angle compris entre 20° et 40°, par exemple égal à 30°.

17. Raccord rapide (R) selon la revendication 16, **caractérisé en ce que** le corps mâle (12) comprend une deuxième surface (34), qui est apte à coopérer avec les organes de verrouillage (132 ; 232 ; 332) alors que les organes de verrouillage sont en position distale de manière à empêcher le retrait axial du corps mâle, la deuxième surface étant inclinée par rapport à l'axe principal (A10) et formant avec l'axe principal un angle compris entre 30 et 60°, par exemple égale à 45°.

18. Raccord rapide (R) selon l'une quelconque des revendications 16 ou 17, **caractérisé en ce que** l'élément mâle (10') comprend un capot protecteur (50), qui est configuré pour prendre appui sur une paroi annulaire (465) de la bague de manœuvre (460), en configuration accouplée du raccord rapide.

## Patentansprüche

1. Buchsenelement (100; 200; 300; 400) einer Schnellkupplung (R) zum lösbaren Verbinden von unter Druck stehenden Fluidleitungen, wobei das Buchsenelement mit einem komplementären Steckelement (10; 10') kuppelbar ist, wobei die Buchse umfasst:
- einen hohlen Buchsenkörper (102), der einen Einführkanal (V106) definiert, wobei der Einführkanal eine Mittelachse (A100) des Buchsenkörpers definiert und aus dem Buchsenkörper durch eine Mündung (118) austritt, wobei die Mündung eine Vorderseite des Buchsenkörpers definiert,
- mindestens ein Verriegelungselement (132; 232; 332), das in einer jeweiligen Aufnahme (130) aufgenommen wird, die in der Dicke des Buchsenkörpers eingerichtet ist, wobei jede Aufnahme in den Einführungskanal mündet, wobei jede Aufnahme in Bezug auf die Mittelachse des Buchsenkörpers derart geneigt ist, dass jedes Verriegelungselement in seiner Aufnahme zwischen einer distalen Position, die eine Position an der Vorderseite des Buchsenkörpers bezeichnet, in der das Verriegelungselement in den Einführkanal (V106) ragt, und einer proximalen Position, die eine Position auf der Rückseite des Buchsenkörpers bezeichnet, in der das Verriegelungselement nicht in den Einführungskanal ragt, beweglich ist;
- einen Schieber (170; 370; 470):
• der eine Wand (169) umfasst, die zu jeder Aufnahme (130) ausgerichtet ist, und
• der zwischen einer vorderen Position, in der die Wand des Schiebers jedes Verriegelungselement in seiner distalen Position hält, und einer hinteren Position, in der jedes Verriegelungselement in seiner proximalen Position ist, beweglich ist,
- einen Betätigungsring (160; 360; 460), der den Buchsenkörper (102) umgibt und der relativ zum Buchsenkörper entlang der Mittelachse (A100) zwischen einer vorgeschobenen Position und einer zurückgezogenen Position beweglich ist, wobei der Betätigungsring ausgelegt ist, um den Schieber (170; 370; 470) von der vorderen Position in die hintere Position zu bewegen, wenn der Betätigungsring aus der vorgeschobenen Position in die zurückgezogene Position bewegt wird, und
- ein erstes Rückstellelement (162), das ausgelegt ist, um den Betätigungsring in seine vorgeschobene Position zurückzustellen,
wobei:
- jedes Verriegelungselement (132; 232; 332) und der Schieber (170; 370; 470) ausgelegt sind, um magnetisch zueinander angezogen zu werden, und
- der Schieber imstande ist, jedes Verriegelungselement magnetisch in seine proximale Position zu bewegen, wenn der Schieber in seine hintere Position verschoben wird.

2. Buchsenelement (100; 200; 300) nach Anspruch 1, **dadurch gekennzeichnet, dass** der Schieber (170; 370) fest mit dem Betätigungsring (160; 360) verbunden ist.

3. Buchsenelement (400) nach Anspruch 1, **dadurch gekennzeichnet, dass** der Schieber (470) ein Rückstellring (471) ist, der auf der Mittelachse (A100) des Buchsenelements zentriert ist, der in Bezug auf den Betätigungsring (460) translatorisch beweglich ist und der radial zwischen dem Betätigungsring und dem Buchsenkörper (102) angeordnet ist.

4. Buchsenelement (400) nach Anspruch 3, **dadurch gekennzeichnet, dass**:
- der Betätigungsring (460) einen axialen Anschlag (462) umfasst, und
- das Buchsenelement ein zweites Rückstellelement (472) umfasst, das ausgelegt ist, um den Rückstellring (471) in seine vorgeschobene Position gegen den axialen Anschlag (462) zu drücken.

5. Buchsenelement (100; 300; 400) nach einem der Ansprüche 1 bis 4, **dadurch gekennzeichnet, dass** das Verriegelungselement (132; 332) eine Kugel ist.

6. Buchsenelement (200) nach einem der Ansprüche 1 bis 4, **dadurch gekennzeichnet, dass** das Verriegelungselement (232) ein Stift ist, der sich gemäß einer Führungsachse (A130) der Aufnahme (130) erstreckt.

7. Buchsenelement (100; 200; 300; 400) nach einem der Ansprüche 1 bis 6, **dadurch gekennzeichnet, dass** mindestens ein Element von jedem Verriegelungselement (132; 232; 332) einerseits und dem Schieber (170; 370; 470) andererseits magnetisch ist und geeignet ist, den Schieber beziehungsweise jedes Verriegelungselement magnetisch anzuziehen.

8. Buchsenelement (300) nach Anspruch 7, **dadurch gekennzeichnet, dass** jedes Verriegelungselement (332) und der Schieber (370) aus einem ferromagnetischen Material hergestellt sind oder mit einer Schicht aus einem ferromagnetischen Material überzogen sind.

9. Buchsenelement (300) nach einem der Ansprüche 1 bis 8, **dadurch gekennzeichnet, dass** der Schieber (370) oder jedes Verriegelungselement einen ferromagnetischen Einsatz (371) umfasst, der jeweils zu jedem Verriegelungselement (332) oder dem Schieber (370) ausgerichtet ist.

10. Buchsenelement (100; 200; 300; 400) nach einem der Ansprüche 1 bis 9, **dadurch gekennzeichnet, dass**
- der Buchsenkörper (102) einen vorderen Körper (106) umfasst, in dem jede Aufnahme (130) ausgebildet ist,
- der vordere Körper (106) aus einem nichtmagnetischen Material hergestellt ist.

11. Buchsenelement (400) nach einem der Ansprüche 1 bis 10, **dadurch gekennzeichnet, dass** das Buchsenelement eine elastische Hülse (474) umfasst, die axial angeordnet ist und sich kontinuierlich zwischen dem Körper (102) und dem Betätigungsring (460) erstreckt und die sich elastisch verformt, wenn der Betätigungsring zwischen einer vorgeschobenen und einer zurückgezogenen Position bewegt wird.

12. Buchsenelement (100; 200; 300; 400) nach einem der Ansprüche 1 bis 11, **dadurch gekennzeichnet, dass** sich die Wand (169) des Schiebers (170; 370; 470) gemäß eines auf der Mittelachse (A100) zentrierten Rotationskegels erstreckt, wobei der Kegel nach vorne offen ist und in Bezug auf die Mittelachse einen Scheitelwinkel von vorzugsweise 40° aufweist.

13. Buchsenelement (100; 200; 300; 400) nach einem der Ansprüche 1 bis 12, **dadurch gekennzeichnet, dass** das Buchsenelement ein Ventil (140; 440) zum Verschließen des Einführkanals (V106) umfasst, wobei das Ventil entlang der Mittelachse (A100) des Buchsenelements beweglich ist.

14. Buchsenelement (100; 200; 300) nach einem der Ansprüche 1 bis 13, **dadurch gekennzeichnet, dass** der Schieber (170; 370) eine radiale Wand (172) umfasst, die ausgelegt ist, um das Verriegelungselement (132; 232; 332) magnetisch anzuziehen und die sich parallel zur Mittelachse (A100) in einer Länge erstreckt, die größer oder gleich einem Weg des Betätigungsrings (160; 360) zwischen seiner vorgeschobenen und seiner zurückgezogenen Position ist, abzüglich eines Werts der axialen Verschiebung des Verriegelungselements zwischen seiner distalen und seiner proximalen Position.

15. Buchsenelement (100; 200; 300; 400) nach einem der Ansprüche 1 bis 14, **dadurch gekennzeichnet, dass** das Rückstellelement (162) des Betätigungsrings (160; 360; 460) eine Feder umfasst, die radial zwischen dem Buchsenkörper (102) und dem Betätigungsring (160; 360; 460) eingefügt ist.

16. Schnellkupplung (R), die zum Verbinden von unter Druck stehenden Fluidleitungen konzipiert ist, wobei die Schnellkupplung umfasst:
- ein Buchsenelement (100; 200; 300; 400) nach einem der Ansprüche 1 bis 15 und
- ein Steckelement (10; 10'), das komplementär zu dem Buchsenelement ist, wobei das Steckelement ausgelegt ist, um in einer gekuppelten Konfiguration der Kupplung mit dem Buchsenelement gekuppelt zu sein,
wobei:
- das Steckelement (10; 10') einen Steckkörper (12) umfasst, der imstande ist, im Einführkanal (V106) des Buchsenkörpers aufgenommen zu werden und der sich gemäß einer Hauptachse (A10) erstreckt, wobei die Hauptachse des Steckelements und die Mittelachse des Buchsenkörpers koaxial sind, wenn der Steckkörper im Einführkanal des Buchsenkörpers aufgenommen ist,
- der Steckkörper eine erste Oberfläche (30) umfasst, die imstande ist, die Verriegelungselemente (132; 232; 332) in ihre proximale Position zu drücken, wenn der Steckkörper in den Einführkanal eingeführt ist, und
- die erste Oberfläche in Bezug auf die Hauptachse (A10) in einem Winkel zwischen 20° und 40°, beispielsweise von gleich 30°, geneigt ist.

17. Schnellkupplung (R) nach Anspruch 16, **dadurch gekennzeichnet, dass** der Steckkörper (12) eine zweite Oberfläche (34) umfasst, die imstande ist, mit den Verriegelungselementen (132; 232; 332) zusammenwirken, während die Verriegelungselemente in distaler Position derart sind, dass das axiales Zurückziehen des Steckkörpers verhindert wird, wobei die zweite Oberfläche in Bezug auf die Hauptachse (A10) geneigt ist und mit der Hauptachse einen Winkel zwischen 30 und 60°, beispielsweise von gleich 45°, bildet.

18. Schnellkupplung (R) nach einem der Ansprüche 16 oder 17, **dadurch gekennzeichnet, dass** das Steckelement (10') eine Schutzkappe (50) umfasst, die ausgelegt ist, um in der gekuppelten Konfiguration der Schnellkupplung an einer ringförmigen Wand (465) des Betätigungsrings (460) anzuliegen.

## Claims

1. A female element (100; 200; 300; 400) of a quick connector (R) intended for the removable connection of pressurized fluid pipes, said female element being able to be coupled with a complementary male element (10; 10') and comprising:
- a hollow female body (102) defining an insertion channel (V106), the insertion channel defining a central axis (A100) of the female body and opening out from the female body by a mouth (118), the mouth defining a front side of the female element,
- at least one locking member (132; 232; 332), which is received in a respective housing (130) arranged in the thickness of the female body, each housing opening into the insertion channel, each housing being inclined relative to the central axis of the female body so that each locking member is movable in its housing between a distal position, which designates a position located on the front side of the female element and in which the locking member projects into the insertion channel, and a proximal position, which designates a component or position located on the rear side of the female element and in which the locking member does not project into the insertion channel;
- a plunger (170; 370; 470):
• which comprises a wall (169) oriented toward each housing (130), and
• which is movable between a front position, in which the wall of the plunger maintains each locking member in its distal position, and a rear position, in which each locking member is in its proximal position,
- an operating ring (160; 360; 460), which surrounds the female body (102) and is movable relative to the female body along the central axis (A100) between an advanced position and a retracted position, the operating ring being configured to drive the plunger (170; 370; 470) from the front position toward the rear position when the operating ring is displaced from the advanced position toward the retracted position, and
- a first return member (162), configured to return the operating ring toward the advanced position,
wherein:
- each locking member (132; 232; 332) and the plunger (170; 370; 470) are configured to be magnetically attracted to each other, and
- the plunger is able to magnetically drive each locking member toward its proximal position when the plunger is displaced toward its rear position.

2. The female element (100; 200; 300) according to claim 1, **characterized in that** the plunger (170; 370) is integral with the operating ring (160; 360).

3. The female element (400) according to claim 1, **characterized in that** the plunger (470) is a return ring (471), which is centered on the central axis (A100) of the female element, which is movable in translation relative to the operating ring (460), and which is interposed radially between the operating ring and the female body (102).

4. The female element (400) according to claim 3, **characterized in that**:
- the operating ring (460) comprises an axial stop (462), and
- the female element comprises a second return member (472), which is configured to push the return ring (471) back into its advanced position against the axial stop (462).

5. The female element (100; 300; 400) according to any one of claims 1 to 4, **characterized in that** the locking member (132; 332) is a ball.

6. The female element (200) according to any one of claims 1 to 4, **characterized in that** the locking member (232) is a pin, which extends according to a guide axis (A130) of the housing (130).

7. The female element (100; 200; 300; 400) according to any one of claims 1 to 6, **characterized in that** at least one element from among, on the one hand, each locking member (132; 232; 332) and, on the other hand, the plunger (170; 370; 470), is magnetic and is able to magnetically attract respectively the plunger or each locking member.

8. The female element (300) according to claim 7, **characterized in that** each locking member (332) and the plunger (370) are made of a ferromagnetic material or are coated with a layer of ferromagnetic material.

9. The female element (300) according to any one of claims 1 to 8, **characterized in that** the plunger (370) or each locking member comprises a ferromagnetic insert (371) oriented toward each locking member (332) or the plunger (370) respectively.

10. The female element (100; 200; 300; 400) according to any one of claims 1 to 9, **characterized in that**
- the female body (102) comprises a front body (106), wherein each housing (130) is formed,
- the front body (106) is made of a non-magnetic material.

11. The female element (400) according to any one of claims 1 to 10, **characterized in that** the female element comprises an elastic sleeve (474), which is axially arranged and extends continuously between the body (102) and the operating ring (460), and which elastically deforms when the operating ring is displaced between the advanced and retracted positions.

12. The female element (100; 200; 300; 400) according to any one of claims 1 to 11, **characterized in that** the wall (169) of the plunger (170; 370; 470) extends according to a cone of revolution centered on the central axis (A100), the cone being open toward the front and presenting, relative to the central axis, an angle at the apex preferably equal to 40°.

13. The female element (100; 200; 300; 400) according to any one of claims 1 to 12, **characterized in that** the female element comprises a valve (140; 440) for closing the insertion channel (V106), the valve being movable along the central axis (A100) of the female element.

14. The female element (100; 200; 300) according to any one of claims 1 to 13, **characterized in that** the plunger (170; 370) comprises a radial wall (172), which is configured to magnetically attract the locking member (132; 232 ; 332) and which extends parallel to the central axis (A100) according to a length greater than or equal to a stroke of the operating ring (160; 360) between its advanced position and its retracted position, minus an amount of axial displacement of the locking member between its distal position and its proximal position.

15. The female element (100; 200; 300; 400) according to any one of claims 1 to 14, **characterized in that** the return member (162) of the operating ring (160; 360; 460) comprises a spring, which is radially interposed between the female body (102) and the operating ring (160; 360; 460).

16. A quick connector (R) designed for the connection of pressurized fluid pipes, the quick connector comprising:
- a female element (100; 200; 300; 400) according to any one of claims 1 to 15, and
- a male member (10; 10') complementary to the female member, the male member being configured to couple with the female member in a coupled configuration of the connector,
wherein:
- the male element (10; 10') comprises a male body (12), which is able to be received in the insertion channel (V106) of the female body and which extends according to a main axis (A10), the main axis of the male element and the central axis of the female element being coaxial when the male body is received in the insertion channel of the female element,
- the male body comprises a first surface (30), which is able to push the locking members (132; 232; 332) into their proximal position when the male body is inserted into the insertion channel, and
- the first surface is inclined, relative to the main axis (A10), at an angle of between 20° and 40°, for example 30°.

17. A quick connector (R) according to claim 16, **characterized in that** the male body (12) comprises a second surface (34), which is able to cooperate with the locking members (132; 232; 332) while the locking members are in a distal position so as to prevent axial withdrawal of the male body, the second surface being inclined relative to the main axis (A10) and forming with the main axis an angle of between 30° and 60°, for example equal to 45°.

18. The quick connector (R) according to any one of claims 16 or 17, **characterized in that** the male element (10') comprises a protective cover (50), which is configured to press on an annular wall (465) of the operating ring (460), in the coupled configuration of the quick connector.
